(19) Europäisches Patentamt / European Patent Office / Office européen des brevets

(11) **EP 1 926 615 B1**

(12) **FASCICULE DE BREVET EUROPEEN**

(45) Date de publication et mention de la délivrance du brevet:
**14.11.2012 Bulletin 2012/46**

(21) Numéro de dépôt: **06808324.5**

(22) Date de dépôt: **13.09.2006**

(51) Int Cl.:
*B60G 17/0165* (2006.01)     *F16F 9/46* (2006.01)
*B60G 3/04* (2006.01)     *B60G 3/20* (2006.01)
*B60G 17/018* (2006.01)     *B60G 17/019* (2006.01)

(86) Numéro de dépôt international:
**PCT/FR2006/050886**

(87) Numéro de publication internationale:
**WO 2007/034102 (29.03.2007 Gazette 2007/13)**

(54) **DISPOSITIF DE COMMANDE DE SUSPENSION, VEHICULE MUNI DE CELUI-CI, PROCEDE D'OBTENTION ET PROGRAMME**

VORRICHTUNG ZUR AUFHÄNGUNGSREGELUNG, FAHRZEUG MIT DIESER VORRICHTUNG, HERSTELLUNGSVERFAHREN DAFÜR UND ENTSPRECHENDES PROGRAMM

SUSPENSION CONTROL DEVICE, VEHICLE COMPRISING SAID DEVICE, PRODUCTION METHOD THEREOF AND ASSOCIATED PROGRAM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.09.2005 FR 0509702**

(43) Date de publication de la demande:
**04.06.2008 Bulletin 2008/23**

(73) Titulaire: **PEUGEOT CITROËN AUTOMOBILES S.A.**
**78140 Vélizy Villacoublay (FR)**

(72) Inventeur: **POILBOUT, François**
**F-75002 Paris (FR)**

(56) Documents cités:
**EP-A- 0 616 912     WO-A-03/069183**
**US-A- 5 445 405     US-A- 5 884 921**
**US-B1- 6 321 887**

EP 1 926 615 B1

## Description

L'invention concerne un dispositif de commande d'une suspension d'un véhicule automobile.

Un tel dispositif selon le préambule de la revendication 1 est connu du document US 5 884 921 A.

Un domaine d'application de l'invention concerne les véhicules automobiles ayant une suspension à ressort, une suspension hydropneumatique ou une suspension d'un autre type.

Ces suspensions comportent sur chaque roue un amortisseur à loi d'amortissement variable, pouvant être réglée par un actionneur commandé par un calculateur embarqué sur le véhicule.

Le calculateur reçoit en entrée des mesures fournies par des capteurs et calcule à partir de celles-ci la ou les grandeurs de commande des actionneurs des amortisseurs.

Le calculateur tient compte notamment des accélérations subies par la caisse du véhicule au cours du trajet, telles que par exemple l'accélération modale de pompage dans la direction verticale, l'accélération modale de roulis autour d'un axe longitudinal et l'accélération modale de tangage autour d'un axe transversal.

Par intégration, le calculateur calcule les vitesses modales correspondantes de la caisse.

On connaît ainsi des dispositifs dans lesquels le calculateur met en oeuvre une régulation pour faire tendre vers zéro la vitesse modale verticale en pompage, la vitesse modale angulaire en roulis et la vitesse modale angulaire en tangage, cette logique étant communément appelée "Skyhook" et permettant d'améliorer le confort des personnes dans la voiture.

On connaît de tels dispositifs qui utilisent trois accéléromètres pour mesurer les trois accélérations modales.

Ces accéléromètres mesurent chacun une accélération suivant une direction déterminée et doivent être implantés d'une manière très précise dans le véhicule, pour fournir une mesure fiable des accélérations modales et ne pas fausser les commandes envoyées par le calculateur aux actionneurs.

En outre, chaque accéléromètre implanté sur le véhicule est relativement onéreux.

L'invention vise à obtenir un dispositif de commande d'une suspension, qui pallie les inconvénients de l'état de la technique et se dispense d'accéléromètres pour calculer au moins une vitesse modale de caisse d'une manière fiable.

A cet effet, un premier objet de l'invention est un dispositif de commande d'une suspension à amortissement variable d'une caisse de véhicule automobile sur ses roues, comportant un calculateur apte à calculer une grandeur de commande d'un actionneur d'au moins un amortisseur à amortissement variable de la suspension en fonction d'au moins une vitesse modale de caisse calculée à partir d'au moins une accélération modale de caisse déterminée sur le véhicule,

caractérisé en ce que

il comprend en outre au moins un capteur de débattement d'une roue par rapport à la caisse du véhicule, connecté à un premier moyen de calcul de l'accélération modale de caisse à partir de la mesure de débattement fournie par le capteur de débattement.

L'invention permet ainsi d'utiliser les capteurs de débattement présents sur les roues pour estimer les accélérations modales de caisse en temps réel. L'invention génère non seulement une économie de trois accéléromètres, mais élimine également l'encombrement lié à ces trois accéléromètres montés dans la caisse du véhicule en des endroits prédéterminés de celle-ci.

Suivant d'autres caractéristiques de l'invention,

- le premier moyen de calcul de l'accélération modale de caisse comprend un estimateur d'au moins un effort exercé par la suspension de ladite roue sur la caisse en fonction d'au moins la mesure de débattement fournie par le capteur de débattement, et un deuxième moyen de calcul de l'accélération modale de caisse en fonction au moins de l'effort de suspension fourni par ledit estimateur d'effort de suspension ;
- l'estimateur d'effort de suspension comprend :

    un module dérivateur calculant une vitesse de débattement à partir de la mesure de débattement fournie par le capteur de débattement,
    un estimateur d'une force d'amortissement de l'amortisseur en fonction de la vitesse de débattement fournie par le module dérivateur et de la loi actuelle mémorisée d'amortissement de l'amortisseur,
    un estimateur d'une force de frottement sec en fonction de la vitesse de débattement,
    un estimateur d'une force de flexion de ressorts et de butées de suspension en fonction de la valeur de débattement et d'une assiette statique déterminée de la caisse ;

- l'estimateur de la force de frottement sec est une fonction tangente hyperbolique (tanh) ou tangente circulaire (tg) de la vitesse de débattement divisée par une valeur fixe, cette fonction étant multipliée par un facteur multiplicatif prescrit ;

- l'estimateur de la force de flexion de ressorts et de butées de suspension comprend :

  un module de calcul de l'assiette statique du véhicule en fonction de la valeur de débattement,
  un additionneur de calcul d'une valeur somme de la valeur de débattement et de l'assiette statique,
  un module de calcul d'une force de flexion de ressorts et de butées de suspension absolue en fonction de ladite valeur somme,
  un module de calcul d'un effort statique de flexion sur ladite roue en fonction de l'assiette statique,
  un soustracteur fournissant ladite force de flexion de ressorts et de butées de suspension par soustraction de l'effort statique de flexion à la force de flexion de ressorts et de butées de suspension absolue ;

- qu'il est prévu un capteur de débattement pour chacune des deux roues avant et des deux roues arrière, et le module de calcul de l'assiette statique comporte un moyen de calcul de l'assiette statique avant et de l'assiette statique arrière du véhicule, comme étant le débattement moyen des débattements des roues avant, respectivement arrière, filtré par un filtre passe-bas, débattement moyen filtré auquel est ensuite rajoutée une constante de décalage d'assiette avant, respectivement arrière ;

- le premier moyen de calcul comprend en outre un estimateur d'un couple de roulis et/ou un estimateur d'un couple de tangage ;

- le premier moyen de calcul comporte :

  un moyen de calcul d'une valeur de recalage RECT d'accélération transversale,
  un capteur d'accélération transversale ACCT de la caisse du véhicule,
  l'estimateur du couple de roulis calculant ledit couple $c_\theta$ de roulis selon la formule :

$$c_\theta = (ACCT\text{-}RECT).(MTOT).d(G, CR)$$

  où MTOT est la masse du véhicule, et
  d(G, CR) est la distance prédéterminée entre le centre de gravité de la caisse et le centre de roulis de celle-ci.

- le premier moyen (CAL) de calcul comporte :

  un moyen de calcul d'une valeur de recalage RECL d'accélération longitudinale,
  un capteur d'accélération longitudinale ACCL de la caisse du véhicule,
  l'estimateur du couple de tangage calculant ledit couple $c_\varphi$ de tangage selon la formule :

$$c_\varphi = (ACCL\text{-}RECL).(MTOT).hG + c_{\varphi B},$$

  où MTOT est la masse du véhicule,
  hG est la hauteur prédéterminée entre le centre de gravité de la caisse et le centre de tangage de celle-ci, et
  $c_{\varphi B}$ est la composante du couple de tangage dû à l'effet Brouilhet ;

- la composante $c_{\varphi B}$ du couple de tangage dû à l'effet Brouilhet est calculée en fonction d'une information de freinage fournie par un module de détermination en fonction d'une valeur de pression de maître cylindre, fournie par un capteur de pression du maître cylindre ;

- le dispositif comprend un premier filtre éliminant au moins les basses fréquences de l'accélération modale de caisse fournie par le premier moyen de calcul et un troisième moyen de calcul de la vitesse modale de caisse à partir de l'accélération modale de caisse filtrée fournie par le premier filtre ;

- la fréquence de coupure basse du premier filtre est supérieure ou égale à 0,1 Hz ;

- le premier moyen de calcul de l'accélération modale de caisse comprend un deuxième filtre éliminant au moins les basses fréquences de la mesure de débattement fournie par le capteur de débattement ;

- la fréquence de coupure basse du deuxième filtre est supérieure ou égale à 0,2 Hz ;

- la grandeur de commande est une loi d'amortissement déterminée parmi une pluralité de lois d'amortissement différentes imposant la force de l'amortisseur en fonction de sa vitesse de débattement.

Un deuxième objet de l'invention est un véhicule automobile comportant une caisse, des roues, une suspension de la caisse sur les roues et un dispositif de commande de la suspension tel que décrit ci-dessus.

Un troisième objet de l'invention est un procédé d'obtention d'un véhicule automobile, le véhicule automobile étant muni de roues, d'une caisse, d'une suspension ayant au moins un amortisseur à amortissement variable de la caisse sur les roues, et d'un dispositif de commande de la suspension, le dispositif de commande ayant au moins un calculateur apte à calculer une grandeur de commande d'un actionneur dudit au moins un amortisseur de la suspension,

le procédé d'obtention comportant une étape de montage du calculateur sur le véhicule,

caractérisé en ce que le procédé d'obtention comporte

au moins une étape de programmation du calculateur suivant au moins un programme comportant des instructions de programme mettant en oeuvre les moyens de calcul du dispositif de commande de la suspension tel que décrit ci-dessus.

Un quatrième objet de l'invention est un programme informatique de pilotage d'un calculateur, comportant des instructions de programme pour le calcul de l'accélération modale de caisse à partir de la mesure de débattement fournie par le capteur de débattement de roue, pour le calcul de la vitesse modale de caisse en fonction d'au moins cette accélération modale de caisse et pour le calcul de la grandeur de commande de l'actionneur en fonction de cette vitesse modale de caisse, lorsqu'il est mis en oeuvre dans un dispositif de commande de suspension tel que décrit ci-dessus.

L'invention sera mieux comprise à la lecture de la description qui va suivre, donnée uniquement à titre d'exemple non limitatif en référence aux dessins annexés, sur lesquels :

- la figure 1 est une vue schématique en perspective d'un dispositif de liaison au sol d'un essieu avant d'un véhicule,
- la figure 2 est un schéma fonctionnel montrant le dispositif de commande de suspension,
- la figure 3 est une vue schématique en perspective de la caisse d'un véhicule, muni de la suspension sur ses roues,
- la figure 4 est un synoptique modulaire d'une unité de calcul de vitesses modales du dispositif de commande selon l'invention,
- la figure 5 est un synoptique modulaire d'un estimateur prévu dans le dispositif de commande suivant la figure 4,
- la figure 6 est un synoptique modulaire d'une unité de calcul d'efforts modaux de type Skyhook,
- la figure 7 est un synoptique modulaire d'une unité de calcul d'une masse suspendue à l'avant et à l'arrière,
- la figure 8 est un organigramme du procédé de calcul des masses suspendues de l'unité selon la figure 7,
- la figure 9 est un synoptique modulaire d'une unité de calcul de niveaux de mouvement et de tressautement de la caisse,
- la figure 10 est un synoptique modulaire d'une unité de calcul d'efforts modaux de type Roadhook,
- la figure 11 est un synoptique modulaire d'une unité de calcul de termes d'efforts modaux anticipatifs,
- la figure 12 est un synoptique modulaire d'une unité de calcul d'efforts de consigne aux roues, comportant l'unité de calcul d'efforts modaux de type Skyhook et l'unité de calcul d'efforts modaux de type Roadhook,
- la figure 13 représente des chronogrammes de signaux de détection de sollicitations et d'un coefficient de pondération intermédiaire calculé en fonction de ceux-ci, intervenant dans l'unité de calcul selon la figure 12,
- la figure 14 montre des chronogrammes de l'angle du volant au cours d'une mise en virage simple, et d'un coefficient de pondération entre les efforts Skyhook et les efforts Roadhook, intervenant dans l'unité de calcul selon la figure 12,
- la figure 15 représente des lois d'amortissement des amortisseurs variables de la suspension,
- la figure 16 est un synoptique modulaire d'une unité de calcul d'une loi d'amortissement de consigne en cas de détection d'une percussion,
- la figure 17 d'une unité de calcul d'une loi d'amortissement de consigne en cas de détection d'une grande amplitude de mouvement de caisse,
- la figure 18 est un schéma en coupe transversale montrant la liaison d'un capteur de débattement à la caisse et à une roue avant ou arrière.

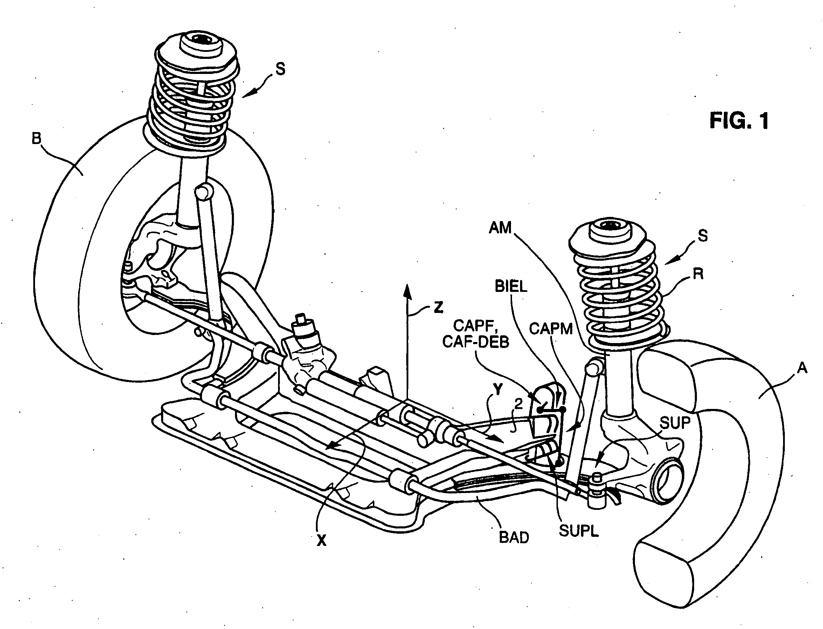

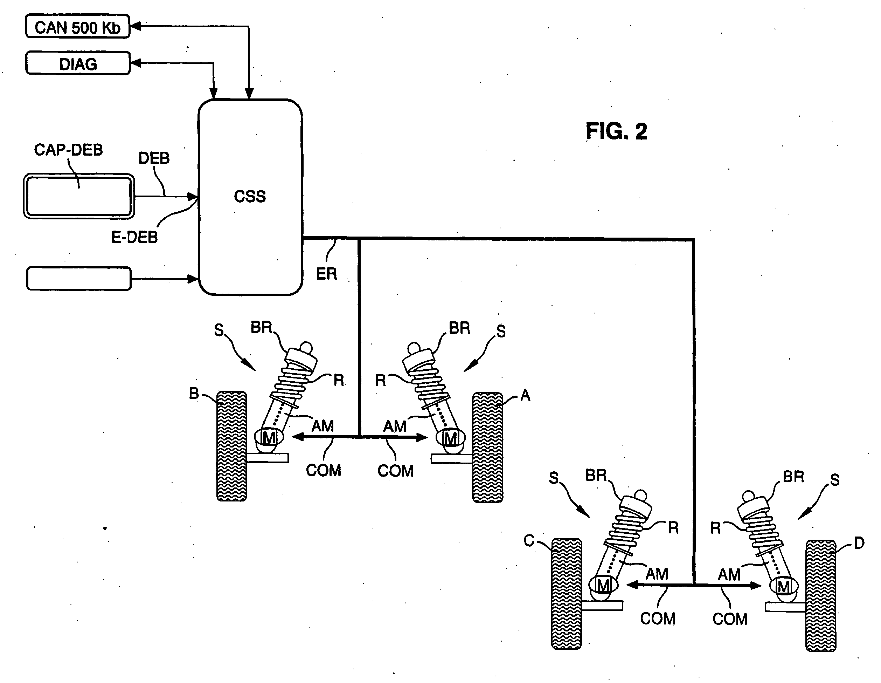

Aux figures 1 à 3, le véhicule 1 comporte une caisse 2 montée sur quatre roues, à savoir une roue avant gauche A, une roue avant droite B, une roue arrière droite C et une roue arrière gauche D.

Chaque roue A, B, C, D est reliée à la caisse 2 par son propre système S de suspension à ressort R entre des butées, mais pourrait également être une suspension hydropneumatique.

Chaque système S de suspension comporte un amortisseur AM muni d'un actionneur M commandé par un calculateur CSS embarqué.

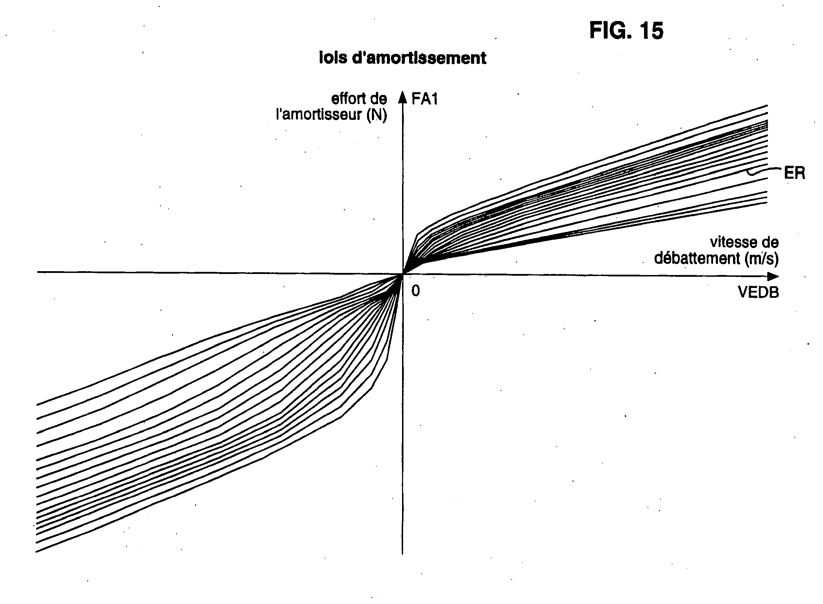

Cet actionneur M est par exemple un moteur qui permet de modifier la section de passage de l'huile dans l'amortisseur AM. Il correspond donc à chaque section de passage de l'huile dans l'amortisseur, une loi d'amortissement différente de celui-ci. Ces lois d'amortissement, également appelés états d'amortissement, sont mémorisées sous la forme de courbes, de tableaux de valeurs, de formules mathématiques ou autres. La figure 15 représente ces lois ER d'amortissement, où chaque loi d'amortissement est une courbe prédéterminée de la force exercée par l'amortisseur vers la caisse en fonction de la vitesse VDEB de débattement de cet amortisseur AM, les lois de plus en plus fermes ayant, à vitesse de débattement constante, des forces plus grandes. Les états ER d'amortissement sont par exemple numérotés dans un ordre croissant pour les états d'amortissement de plus en plus fermes, c'est-à-dire correspondant à une force d'amortisseur de plus en plus grande à vitesse VDEB de débattement constante. Ainsi, un état d'amortissement minimum correspond à un état d'amortissement ayant une fermeté minimale, c'est-à-dire correspondant à une force d'amortisseur supérieure ou égale à un minimum pour chaque vitesse VDEB de débattement.

Le calculateur CSS est relié au réseau CAN du véhicule pour récupérer une grande partie des signaux utiles (vitesse véhicule, régulation ABS, accélérations latérale et longitudinales fournies par le système de freinage, sportivité demandée par le conducteur fournie par une interface avec l'utilisateur (boîtier de servitude intelligent), etc...). Il utilise également ses propres capteurs (liaisons filaires directes avec les capteurs) pour connaître les mouvements de la voiture à chaque instant. Il est enfin relié aux actionneurs dont il assure le pilotage.

Le moteur peut être pas à pas, auquel cas l'amortisseur AM possède un nombre déterminé N de lois d'amortissement discrètes ou un moteur à courant continu asservi en position, auquel cas l'amortisseur AM possède une infinité de lois d'amortissement.

Par exemple, l'actionneur à moteur pas à pas peut prendre neuf positions stables distinctes, ce qui permet d'obtenir neuf lois d'amortissement, du souple au ferme. En effet, plus la section de passage de l'huile sera petite, plus l'effort d'amortissement sera important, et plus l'amortisseur sera ferme.

Il peut exister des lois stables et des lois instables. Pour les lois stables, il suffit de piloter le moteur pas à pas pour qu'il trouve sa consigne angulaire. Une fois le pilotage terminé, l'actionneur à loi stable reste dans cette position même s'il n'est plus alimenté. A l'inverse, pour les lois instables, le moteur doit être maintenu alimenté pour rester dans cette loi. Par exemple, dans un mode de réalisation, il y a à la fois des lois stables et des lois instables, les lois instables étant par exemple positionnées entre les lois stables consécutives. Par exemple, à la figure 15, on a neuf lois stables et huit lois instables. Dans un autre mode de réalisation, toutes les lois sont stables, par exemple avec 16 lois stables.

Chaque actionneur M possède une entrée COM de commande reliée au calculateur CSS pour recevoir de celui-ci une grandeur ER de commande sélectionnant une position de l'actionneur M parmi plusieurs pour imposer une loi d'amortissement prédéterminée, correspondant à cette position.

Suivant l'invention, il est prévu un capteur CAP-DEB de débattement sur au moins une des roues A, B, C, D du véhicule, et de préférence sur chaque roue A, B, C, D. Chaque capteur CAP-DEB mesure donc le débattement DEB de sa roue associée par rapport à la caisse 2.

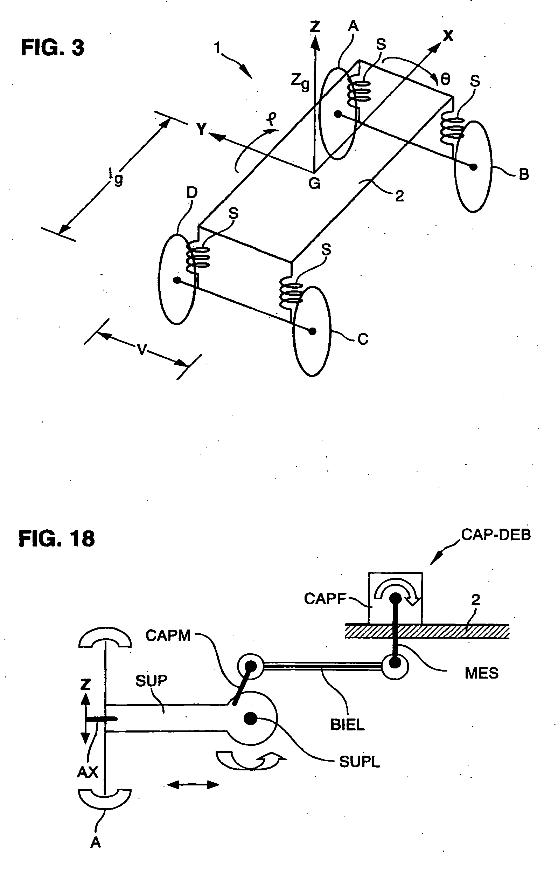

Les capteurs CAP-DEB de débattement de roue sont par exemple angulaires et donnent la valeur instantanée de l'angle compris entre l'axe de rotation de la roue et la caisse 2. Par exemple, aux figures 1 et 18, chaque capteur CAP-DEB de débattement comporte une partie fixe CAPF, telle qu'un boîtier, fixée à la caisse 2, et une partie mobile CAPM, reliée à un élément fixé à la roue. Une biellette BIEL de connexion relie la partie mobile CAPM à la partie fixe CAPF et fait tourner un organe MES de mesure angulaire contenu dans la partie fixe CAPF, lorsque la roue monte ou descend par rapport à la caisse 2. La partie mobile CAPM est par exemple fixée sur un élément SUP de support de l'axe AX de rotation de la roue. Cet élément SUP de support est mobile autour d'un axe sensiblement longitudinal SUPL par rapport à la caisse 2. La partie mobile CAPM est fixée sur l'élément SUP de support à distance de son axe SUPL de rotation.

Les mesures DEB de débattement des roues A, B, C, D sont envoyées des capteurs CAP-DEB au calculateur CSS, qui comporte des entrées E-DEB correspondantes.

Accélérations modales

Le calculateur CSS calcule à partir des mesures DEB de débattement des roues l'accélération modale $\ddot{z}G$ en pompage de la caisse, l'accélération modale angulaire $\ddot{\theta}$ en roulis et l'accélération modale angulaire $\ddot{\varphi}$ en tangage, selon les formules ci-dessous.

$$\begin{cases} \ddot{z}G = \dfrac{FA + FB + FC + FD}{M} \\[2em] \ddot{\theta} = \dfrac{\dfrac{v}{2}(FB + FC - FA - FD) + C_{BAD} + C_{\theta}}{I_{\theta}} \\[2em] \ddot{\varphi} = \dfrac{(e - \lg)(FC + FD) - \lg(FA + FB) + C_{\varphi}}{I_{\varphi}} \end{cases}$$

où G est le centre de gravité de la caisse 2, zG est l'altitude de G suivant une direction verticale ascendante Z, $\theta$

est l'angle de roulis de la caisse 2 autour d'un axe longitudinal X passant par G et dirigé de l'arrière vers l'avant, $\varphi$ est l'angle de tangage de la caisse 2 autour d'un axe transversal passant par G et dirigé de la droite vers la gauche, les axes X, Y, Z formant un repère orthonormal.

FA, FB, FC, FD sont les forces exercées par les roues respectives A, B, C, D sur la caisse 2 par l'intermédiaire de leur suspension S.

$v$ est la voie de la caisse 2, c'est-à-dire la distance entre les roues droite et les roues gauche dans le sens transversal, e est l'empattement du véhicule,

1g est la distance longitudinale entre le centre de gravité G et l'axe transversal des roues avant A et B,

M est la masse prédéterminée de la caisse 2 sans occupant du véhicule.

$I_\theta$ est le moment d'inertie en roulis, et $I_\varphi$ est le moment d'inertie en tangage.

CBAD est un couple exercé par la barre anti-devers BAD sur la caisse 2.

Ce est un couple de roulis, et $C_\varphi$ un couple de tangage.

Ci-dessous sont décrits les différents moyens de calcul mettant en oeuvre le procédé de commande suivant l'invention.

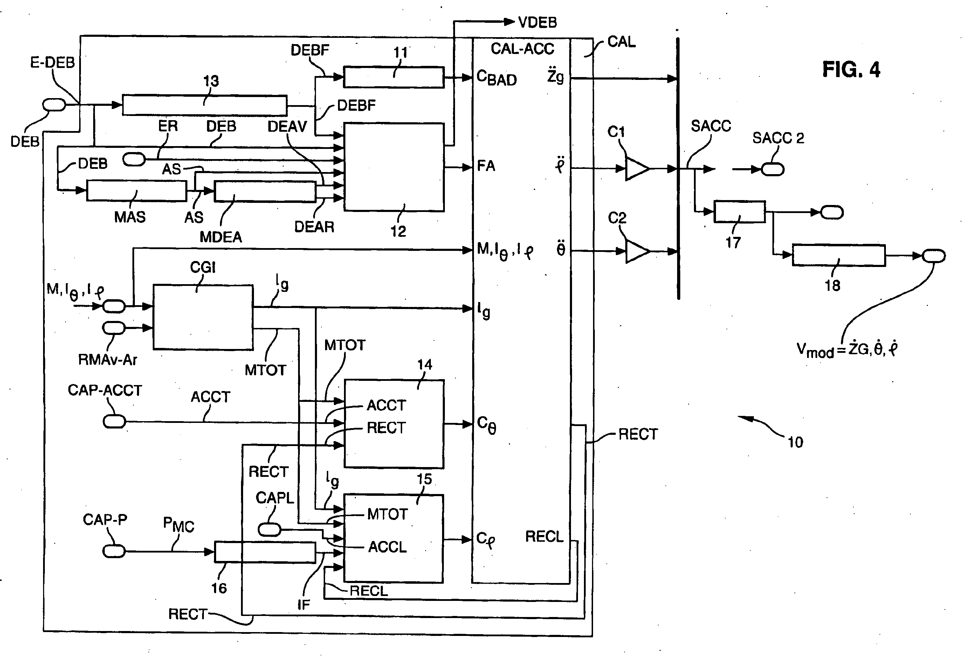

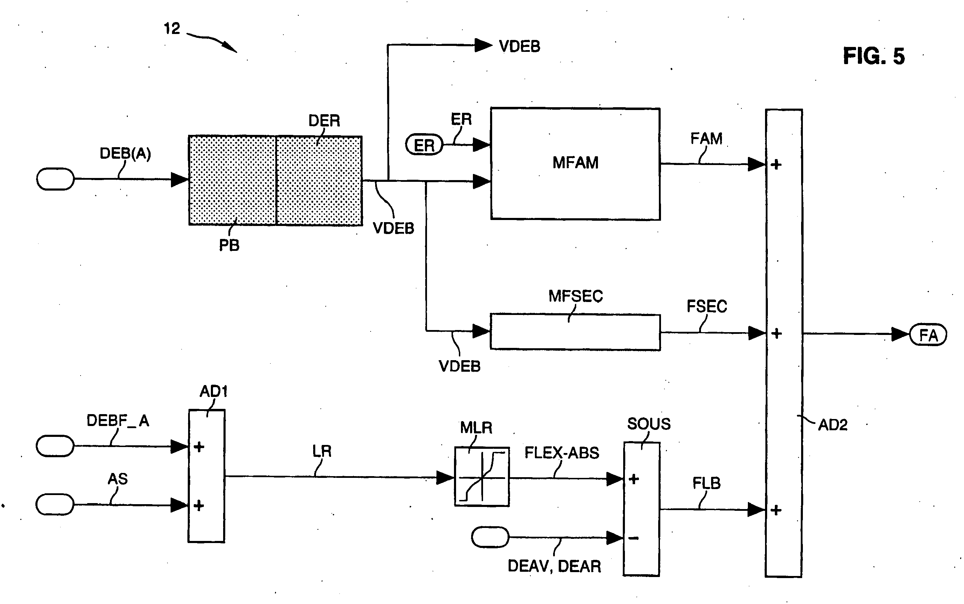

Le mode de calcul des accélérations modales dans le calculateur CSS est par exemple mis en oeuvre par le module 10 représenté aux figures 4 et 5.

Les blocs modulaires décrits aux figures sont mis en oeuvre dans le calculateur CSS par tout moyen automatique approprié, notamment logiciel.

Le module 10 comporte un premier moyen CAL de calcul des accélérations modales $\ddot{z}G$, $\ddot{\theta}$ et $\ddot{\varphi}$, recevant en entrée les mesures DEB de débattement des roues.

Le moyen CAL comporte :

- un estimateur 11 du couple $C_{BAD}$ généré par la barre BAD anti-devers,
- un estimateur 12 des forces FA, FB, FC, FD exercées par les roues respectives A, B, C, D sur la caisse 2,
- un filtre 13 de la mesure de débattement DEB fournie en entrée sur le moyen CAL.

Le filtre 13 élimine les basses fréquences de la mesure DEB de débattement fournie par les capteurs CAP-DEB.

Ce filtre 13 comporte par exemple un filtre passe-haut ayant une fréquence de coupure basse supérieure ou égale à 0,2 Hz. Le filtre 13 est par exemple réalisé par un filtre passe-bande ayant donc en plus une fréquence de coupure haute, par exemple supérieure ou égale à 8 Hz, qui permet de garder une phase suffisamment constante dans la bande passante.

Le débattement de roue filtré DEBF fourni à la sortie du filtre 13 à partir de la mesure DEB de débattement de roue est envoyé à l'entrée de l'estimateur 11, ainsi qu'à une autre entrée de l'estimateur 12. A partir des quatre mesures DEB(A), DEB(B), DEB(C), DEB(D) de débattement fournies par les capteurs CAP-DEB sur les roues respectives A, B, C, D, le filtre 13 fournit quatre mesures de débattement filtrées DEBF(A), DEBF(B), DEBF(C), DEBF(D).

Barre anti-devers

L'estimateur 11 calcule le couple $C_{BAD}$ de barre anti-devers en fonction des valeurs de débattement filtrées DEBF fournies par le filtre 13 de la manière suivante :

- pour la roue avant gauche :

$$C_{BAD}(A) = (DEBF(A) - DEBF(B)).(Kbadav)/v^2,$$

- pour la roue avant droite :

$$C_{BAD}(B) = -C_{BAD}(A),$$

- pour la roue arrière gauche :

$$C_{BAD}(D) = (DEBF(D) - DEBF(C)).(Kbadar)/v^2,$$

- pour la roue arrière droite :

$$C_{BAD}(C) = -C_{BAD}(D),$$

Où Kbadav est un paramètre prédéterminé correspondant à la raideur de la barre anti-devers avant BAD, Kbadar est un paramètre prédéterminé correspondant à la raideur de la barre anti-devers arrière, non représentée.

Effort de suspension

L'estimateur 12 d'effort de suspension comporte une entrée pour les débattements filtrés DEBF, une entrée pour les débattements non filtrés DEB, une entrée pour l'état réel ER de l'actionneur, c'est-à-dire la loi ER d'amortissement qu'il met actuellement en oeuvre, cet état réel et ses changements étant par exemple mémorisés, une entrée DEAV d'effort statique sur les roues avant et une entrée DEAR d'effort statique sur les roues arrière.

Ci-dessous, cet estimateur 12 est décrit à la figure 5 à titre d'exemple pour le calcul de l'effort de suspension FA sur la roue avant gauche A. Bien entendu, le calcul est analogue pour les autres efforts FB, FC, FD, en remplaçant ce qui se rapporte spécifiquement à la roue A par les valeurs correspondant à la roue B, C ou D.

Dans l'estimateur 12, le débattement DEB(A) mesuré par le capteur CAP-DEB sur la roue A est envoyé à un filtre PB passe-bas limitant la bande passante du débattement DEB(A), suivi d'un module dérivateur DER pour l'obtention de la vitesse de débattement VDEB pour la roue A. Les vitesses VDEB de débattement des roues sont fournies sur une sortie de l'estimateur 12 et du module 10.

Un module MFAM de calcul de la force FAM d'amortissement exercée par l'amortisseur AM sur la caisse 2 reçoit en entrée l'état réel ER et la vitesse de débattement VDEB de la roue concernée. Les lois d'amortissement des amortisseurs AM sont par exemple mémorisées à l'avance, ou peuvent être recalculées une fois l'état ER spécifié. Chacune des lois ER d'amortissement permet de calculer ou déterminer la vitesse VDEB de débattement en fonction de la force FAM d'amortissement exercée par l'amortisseur AM et inversement. Le module MFAM détermine à partir de l'état ER la loi d'amortissement actuellement en vigueur pour l'amortisseur AM de la roue A et détermine à partir de la vitesse de débattement VDEB(A) de la roue A pour cette loi sélectionnée, par exemple par lecture de la courbe de cette loi, la force FAM d'amortissement de la roue A.

Un autre module MFSEC de calcul d'une force FSEC de frottement sec de l'amortisseur AM de la roue A reçoit en entrée également la vitesse VDEB de débattement de celle-ci et calcule la force FSEC de frottement sec par la formule suivante :

$$Fsec = (FsAv) . \tanh(VDEB/10^{-2})$$

où VDEB est en cm/s, et FsAv est un coefficient de frottement sec des roues avant, ayant été calculé au préalable sur un banc d'essai et est par exemple égal à environ 200 Newton.

Ce coefficient de frottement est remplacé par un coefficient FsAr de frottement pour les roues arrière.

Estimateur de caractéristiques statiques

Un module MAS de calcul d'assiette statique AS reçoit en entrée les débattements DEB des quatre roues A, B, C, D et calcule à partir de ceux-ci l'assiette statique AS, qui représente la position statique d'équilibre de la suspension S lorsque le véhicule est immobile sur un sol horizontal. Ce module MAS calcule une assiette statique avant ASav et une assiette statique arrière ASar. L'assiette statique avant ASav est par exemple calculée comme étant le débattement moyen DEBAVMOY (demi-somme) des débattements DEB des roues avant A, B, filtré par un filtre passe-bas, par exemple de type Butterworth du second ordre, débattement moyen filtré auquel est ensuite rajoutée une constante de décalage d'assiette avant. L'assiette statique arrière ASar est par exemple calculée comme étant le débattement moyen DEBARMOY (demi-somme) des débattements DEB des roues arrières C, D, filtré par un filtre passe-bas, par exemple de type Butterworth du second ordre, débattement moyen filtré auquel est ensuite rajoutée une constante de décalage d'assiette arrière. On suppose que le capteur de débattement CAP-DEB est calibré pour mesurer le débattement par rapport à cette assiette statique AS. Un additionneur AD1 additionne le débattement filtré DEBF-A de la roue A à l'assiette statique AS calculée pour la roue A, c'est-à-dire l'assiette statique avant, pour obtenir la longueur réelle LR du ressort R associée à la roue A.

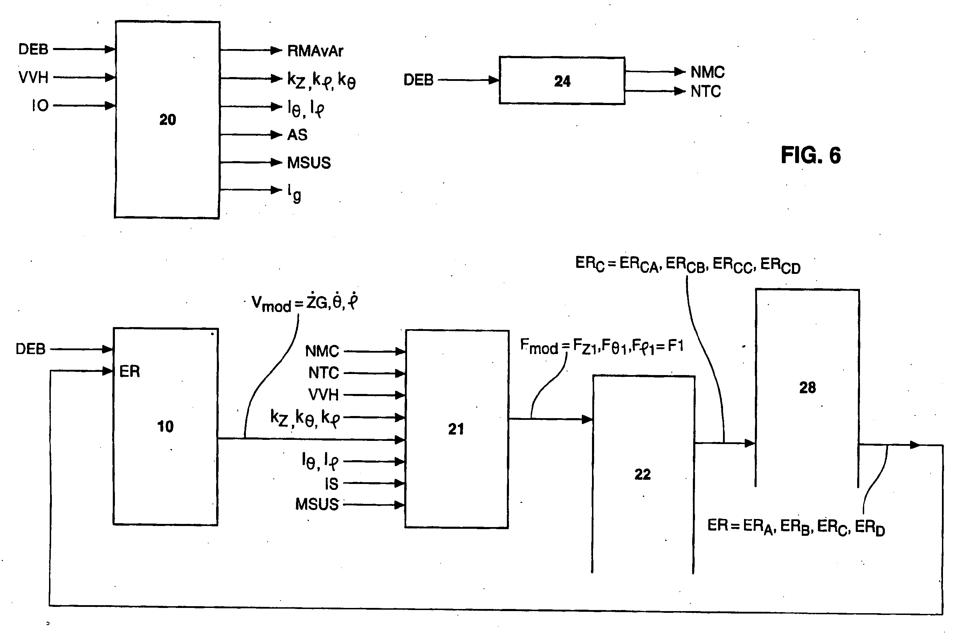

Le module MAS de calcul d'assiette statique AS fait par exemple partie d'un estimateur 20 de caractéristiques statiques représenté à la figure 6, recevant en entrée les débattements DEB des quatre roues A, B, C, D, une pression statique avant et une pression statique arrière dans le cas d'une suspension hydropneumatique, la vitesse VVH du véhicule, une information d'ouvrant IO. La vitesse VVH du véhicule est par exemple fournie par un capteur de vitesse ou tout autre moyen de calcul.

L'estimateur 20 de caractéristiques statiques comporte :

- un moyen de calcul d'une masse dynamique apparente avant MDAAV et d'une masse dynamique apparente arrière MDAAR, en fonction des débattements DEB,
- un moyen de calcul d'un biais aérodynamique avant BAAV et d'un biais aérodynamique arrière BAAR, en fonction de la vitesse du véhicule VVH,
- un moyen de calcul de la masse suspendue MSUS du véhicule et d'une valeur de répartition de masse RMAvAr entre l'avant et l'arrière du véhicule, en fonction de la masse dynamique apparente avant MDAAV, de la masse dynamique apparente arrière MDAAR, du biais aérodynamique avant BAAV et du biais aérodynamique arrière BAAR,
- un moyen de calcul du moment d'inertie en roulis $I_\theta$ et du moment d'inertie en tangage $I_\varphi$ en fonction de la masse suspendue MSUS et de la masse suspendue arrière MSUSAR,
- un moyen de calcul de la longueur lg séparant le centre de gravité G de l'axe des roues avant A, B,
- un moyen de calcul d'une raideur modale en pompage $k_z$, d'une raideur modale en tangage $k_\varphi$ et d'une raideur modale en roulis $k_\theta$, en fonction de l'assiette statique AS et de la valeur de répartition de masse RMAvAr entre l'avant et l'arrière.

La masse dynamique apparente avant MDAAV est calculée en

- calculant le débattement relatif avant, égal au débattement moyen (demi-somme) des débattements DEB des roues avant A, B, auquel est ensuite rajoutée une constante de décalage avant,
- extrayant un effort dynamique avant de flexion de ressort EDFAV à partir d'une table ou courbe enregistrée donnant cet effort EDFAV en fonction du débattement relatif avant,
- calculant la masse dynamique apparente avant MDAAV par la formule :

$$MDAAV = (EDFAV.2/g) + \text{constante avant,}$$

Où g est la constante d'accélération de la pesanteur = 9,81 m.s$^{-2}$.

La masse dynamique apparente arrière MDAAR est calculée en

- calculant le débattement relatif arrière, égal au débattement moyen (demi-somme) des débattements DEB des roues arrière C, D, auquel est ensuite rajoutée une constante de décalage arrière
- extrayant un effort dynamique arrière de flexion de ressort EDFAR à partir d'une table ou courbe enregistrée donnant cet effort EDFAR en fonction du débattement relatif arrière,
- calculant la masse dynamique apparente arrière MDAAR par la formule :

$$MDAAR = (EDFAR.2/g) + \text{constante arrière.}$$

L'effort dynamique de flexion de ressort est nul dans la position d'équilibre du ressort correspondant à sa position statique, le débattement relatif avant étant le débattement par rapport à la position d'équilibre statique, l'extraction se faisant par exemple par interpolation de la table mais pouvant également être effectuée à partir d'une courbe enregistrée de EDFAV, EDFAR.

Dans le cas d'une suspension hydropneumatique, la masse MDAAR et la masse MDAAV sont calculées en utilisant la pression statique avant et la pression statique arrière.

Le biais aérodynamique avant BAAV, homogène à une masse en kg, est calculé par la formule :

$$BAAV = (CAV.VVH^2)/g,$$

Où CAV est un coefficient prédéterminé aérodynamique avant.

Le biais aérodynamique arrière BAAR, homogène à une masse en kg, est calculé par la formule :

$$BAAR = (CAR.VVH^2)/g,$$

Où CAR est un coefficient prédéterminé aérodynamique arrière.

Calcul de la masse suspendue MSUS du véhicule et de la valeur de répartition de masse RMAvAr

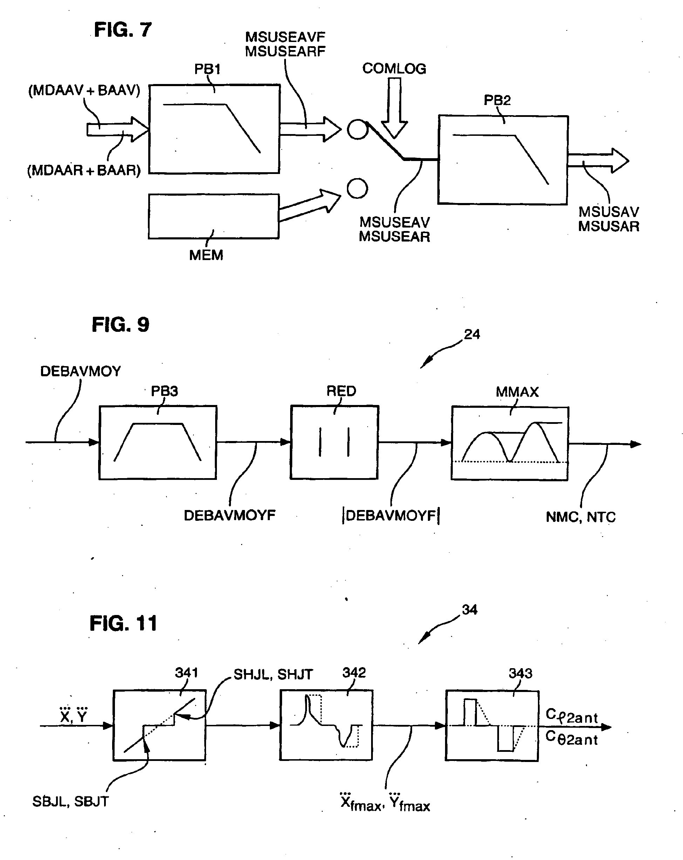

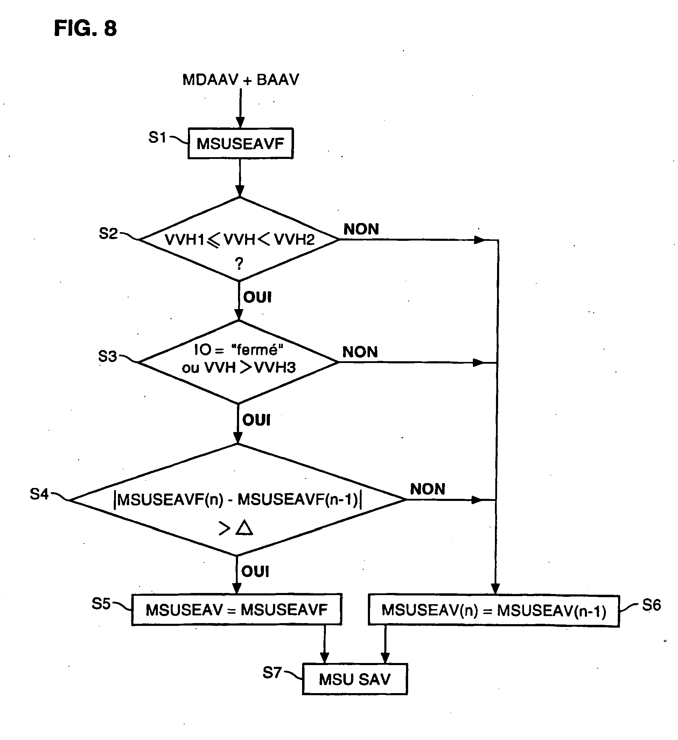

On calcule d'abord une masse suspendue d'essieu avant MSUSEAV. Pour ce faire, ainsi que cela est représenté aux figures 7 et 8, on filtre lors de l'étape S1 la somme (masse dynamique apparente avant MDAAV + biais aérodynamique avant BAAV) par un filtre passe-bas PB1 pour obtenir une masse suspendue d'essieu avant filtrée MSUSEAVF.
Puis, on examine

- à l'étape S2, si la vitesse VVH du véhicule est comprise entre un seuil bas prédéterminé VVH1 et un seuil haut prédéterminé WH2,
- à l'étape S3, si l'information d'ouvrant IO est à « fermé » ou la vitesse VVH du véhicule est supérieure à un seuil prescrit VVH3,
- à l'étape S4, si l'écart entre la masse suspendue d'essieu avant filtrée MSUSEAVF(n) et sa valeur MSUSEAVF(n-1) précédemment enregistrée en mémoire est suffisant (supérieur en valeur absolue à un écart prescrit $\Delta$).

Dans le cas où ces conditions sont réalisées, la masse suspendue d'essieu avant MSUSEAV est prise égale à la masse suspendue d'essieu avant filtrée MSUSEAVF et est enregistrée dans la mémoire MEM, à l'étape S5 et dans la position du commutateur logique COMLOG représentée à la figure 7.
Dans le cas où l'une, plusieurs de ou toutes ces conditions ne sont pas réalisées, la masse suspendue d'essieu avant MSUSEAV(n) est inchangée et reste égale à la valeur MSUSEAV(n-1) précédemment enregistrée dans la mémoire MEM, à l'étape S6 et dans l'autre position du commutateur logique COMLOG.
Puis, à l'étape S7, on calcule une masse suspendue avant MSUSAV en filtrant la masse suspendue d'essieu avant MSUSEAV par un filtre passe-bas PB2, et éventuellement en saturant les valeurs obtenues par ce filtrage au-dessus d'un seuil haut et au-dessous d'un seuil bas.
Les filtres passe-bas PB1 et PB2 sont par exemple d'ordre 1 avec chacun une fréquence de coupure à 0,02 Hz.
Le déroulement est analogue pour le calcul de la masse suspendue d'essieu arrière MSUSEAR et de la masse suspendue arrière MSUSAR, en remplaçant MDAAV+BAAV par MDAAR+BAAR et en remplaçant MSUSEAVF par MSUSEARF.
La masse suspendue du véhicule MSUS est alors calculée en faisant la somme de la masse suspendue avant MSUSAV et de la masse suspendue arrière MSUSAR

$$MSUS = MSUSAV + MSUSAR$$

La valeur de répartition de masse avant - arrière RMAvAr est alors calculée en divisant la masse suspendue avant MSUSAV par la masse suspendue du véhicule MSUS

$$RMAvAr = MSUSAV / MSUS$$

Calcul des moments d'inertie

Le moment d'inertie en roulis $I_\theta$ est calculé en fonction de la masse suspendue arrière MSUSAR par la formule

$$I_\theta = A_y.MSUSAR + B_y$$

Avec MSUSAR = (1-RMAvAr).MSUS,
Où Ay et By sont des paramètres prédéterminés.

Le moment d'inertie en tangage $I_\varphi$ est calculé en fonction de la masse suspendue MSUS par la formule

$$I_\varphi = A_x.MSUS + B_x$$

Où $A_x$ et $B_x$ sont des paramètres prédéterminés.

Calcul de la longueur lg et des raideurs modales

On calcule une raideur de suspension avant kAV et une raideur de suspension arrière kAR.

La raideur de suspension avant kAV est obtenue en extrayant de la table ou courbe préenregistrée donnant la raideur de la suspension avant en fonction de l'assiette statique avant, la valeur de raideur avant correspondant à l'assiette statique avant ASav, par exemple par interpolation linéaire.

La raideur de suspension arrière kAR est obtenue en extrayant de la table ou courbe préenregistrée donnant la raideur de la suspension arrière en fonction de l'assiette statique arrière, la valeur de raideur arrière correspondant à l'assiette statique arrière ASar, par exemple par interpolation linéaire.

La longueur lg est calculée par la formule suivante :

$$lg = (1 - RMAvAr).e$$

Le module CGI de la figure 4 met en oeuvre ce calcul de la longueur lg et fait par exemple partie de l'estimateur 20.

La raideur modale en pompage $k_z$, est calculée comme étant la somme de la raideur de suspension avant kAV et de la raideur de suspension arrière kAR

$$k_z = kAV + kAR$$

La raideur modale en tangage $k_\varphi$ est calculée par la formule

$$k_\varphi = kAV.(lg)^2 + kAR.(e\text{-}lg)^2$$

La raideur modale en roulis $k_\theta$ est calculée par la formule

$$k_\theta = Kbadav + Kbadar + v^2.(kAV+kAR)/4$$

Calcul des accélérations modales de caisse

A la figure 5, un module MLR calcule, à partir d'une table ou courbe enregistrée donnant une force de flexion en fonction de la longueur du ressort R, la force de flexion absolue FLEX-ABS correspondant à la valeur réelle LR entrée de cette longueur. Cette courbe enregistrée de flexion tient également compte des butées de suspension, qui sont par exemple en caoutchouc et qui exercent un effort plus important sur la caisse lorsque le ressort appuie sur ces butées en fin de course de l'amortisseur AM.

En outre, un module MDEA reçoit en entrée l'assiette statique AS et calcule en fonction de celle-ci l'effort statique correspondant DEAV de flexion sur les roues avant et l'effort statique correspondant DEAR de flexion sur les roues arrière.

Un soustracteur SOUS soustrait de la force FLEX-ABS de flexion absolue calculée l'effort statique DEAV ou DEAR, à savoir l'effort DEAV dans le cas de la roue avant A, pour obtenir une force FLB de flexion de ressorts et des butées de suspension, correspondant à la force exercée par le ressort R et les butées d'extrémité sur la caisse 2.

Un additionneur AD2 additionne la force FAM d'amortissement, la force FSEC de frottement sec et la FLB de flexion de ressorts et des butées de suspension pour obtenir la force FA selon la formule suivante :

$$FA = FAM + FSEC + FLB.$$

Un module CAL-ACC reçoit en entrée le couple $C_{BAD}$ calculé par le module 11, les forces FA, FB, FC, FD de suspension calculées par l'estimateur 12, ainsi que la masse M de la caisse, le moment d'inertie $I_\theta$ en roulis et le moment d'inertie $I_\varphi$ en tangage, qui sont préenregistrés, pour calculer en fonction de ceux-ci les accélérations modales $\ddot{z}G$, $\ddot{\theta}$ et $\ddot{\varphi}$, en négligeant l'influence des couples $C_\theta$ et $C_\varphi$, c'est-à-dire en prenant Ce = 0 et $C_\varphi$ = 0, dans un mode de réalisation.

Dans le perfectionnement décrit ci-dessous, on tient compte des couples $C_\theta$ et $C_\varphi$ dans le calcul des accélérations modales.

Un module CGI de calcul de grandeur inertielle calcule en fonction de M, $I_\theta$ et $I_\varphi$ ainsi que d'une valeur entrée de répartition de masse RMAvAr entre l'avant et l'arrière du véhicule, une masse totale MTOT = MREF du véhicule tenant compte d'un chargement normalisé du véhicule, comme par exemple quatre personnes de 67 kg dans l'habitacle du véhicule et 28 kg de bagages dans le coffre arrière, et la longueur Ig séparant le centre de gravité G de l'axe des roues avant A, B, qui est entrée dans le module CAL-ACC. La valeur de répartition de masse RMAvAr est estimée en permanence à l'aide des valeurs de débattement DEB fournies par les capteurs CAP-DEB de débattement et de la comparaison de chacune de ces valeurs à une moyenne calculée des débattements DEB.

Un accéléromètre CAP-ACCT est prévu sur le véhicule pour fournir une accélération transversale ACCT à un estimateur 14 du couple de roulis $C_\theta$, recevant également en entrée la masse totale MTOT et une valeur RECT de recalage de l'accélération transversale ACCT.

L'accéléromètre transversal CAP-ACCT est positionné sur le centre de gravité G et non sur le centre CR de roulis. La valeur RECT de recalage de l'accélération transversale est calculée par le module CAL-ACC de la manière suivante :

$$RECT(n) = ACCT(n) - \ddot{\theta}\,(n\text{-}1).(HCdG - hRoulis)$$

Où $\ddot{\theta}$ est l'accélération modale de roulis non filtrée, et

Où n désigne la valeur de la variable au cycle actuel et (n-1) désigne la valeur de la variable au cycle précédent.

L'estimateur 14 calcule le couple de roulis $C_\theta$ par la formule suivante:

$$c_\theta = (ACCT - RECT) . (MTOT) . d(G, CR)$$

Où d(G,CR) = HCdG - hRoulis est la distance entre le centre de gravité G et le centre CR de roulis, et est préenregistrée.

Un estimateur 15 du couple $C_\varphi$ de tangage reçoit en entrée la longueur Ig, la masse totale MTOT, une accélération longitudinale ACCL fournie par un accéléromètre longitudinal CAPL disposé dans la caisse du véhicule, une information IF de freinage et une valeur RECL de recalage d'accélération longitudinale calculée par le module CAL-ACC.

La valeur RECL de recalage d'accélération longitudinale est calculée par le module CAL-ACC de la manière suivante :

$$RECL(n) = ACCL(n) - \ddot{\varphi}\,(n\text{-}1).(HCdG)$$

Où $\ddot{\varphi}$ est l'accélération modale de tangage non filtrée.

L'estimateur 15 calcule le couple $C_\varphi$ de tangage selon la formule suivante :

$$c_\varphi = (ACCL - RECL).(MTOT).h_G + c_{\varphi B}$$

$h_G$ = HCdG représente la hauteur suivant l'axe Z du centre de gravité G par rapport au centre CT de tangage, et est préenregistrée.

La composante $c_\varphi B$ du couple $c_\varphi$ est la composante du couple de tangage dû à l'effet Brouilhet et est calculée en fonction de l'information IF de freinage. Un module 16 de détermination fournit cette information IF de freinage en fonction d'une valeur de pression $P_{MC}$ de maître cylindre, elle-même fournie par un capteur CAP-P de pression du

**EP 1 926 615 B1**

maître cylindre des freins.

Les valeurs calculées des couples $C_\theta$ et $C_\varphi$ sont entrées dans le module CAL-ACC qui calcule à partir de celles-ci et de la valeur des autres entrées et fournit en sortie l'accélération $\ddot{z}G$ modale en pompage, l'accélération modale $\ddot{\theta}$ en roulis, l'accélération modale $\ddot{\varphi}$ en tangage, et les valeurs de recalage RECT et RECL. L'accélération modale $\ddot{\theta}$ en roulis et l'accélération modale $\ddot{\varphi}$ en tangage sont envoyées respectivement à deux convertisseurs C1 et C2 de degrés en radians par seconde pour ensuite être fournis avec $\ddot{z}G$ sur une sortie SACC pour les trois accélérations modales non filtrées et de là à une sortie SACC2 du module 10 vers l'extérieur.

En outre, ces trois accélérations modales présentes sur la sortie SACC du module 10 sont chacune envoyées à un filtre 17 éliminant les basses fréquences au-dessous d'une fréquence de coupure basse de par exemple 0.1 Hz, 0.2 Hz ou 0.3 Hz. Le filtre 17 présente par exemple en plus de cette composante passe-haut une composante passe-bas pour former un filtre passe-bande. La fréquence de coupure basse du filtre 17 peut être différente selon l'accélération modale $\ddot{z}G$, $\ddot{\theta}$ ou $\ddot{\varphi}$.

Les accélérations modales filtrées en sortie du filtre 17 sont ensuite envoyées à un module 18 intégrateur comportant en sortie un filtre passe-haut, fournissant en sortie les vitesses modales de caisse estimées, à savoir la vitesse modale $\dot{z}G$ en pompage de caisse, la vitesse modale $\dot{\theta}$ en roulis de caisse, et la vitesse modale $\dot{\varphi}$ en tangage de caisse, sur une sortie du module 10.

Ces vitesses modales de caisse, $\dot{z}G$ en pompage, $\dot{\theta}$ en routis, $\dot{\varphi}$ en tangage sont des vitesses absolues par rapport à un repère galiléen et sont appelées premières vitesses modales de caisse pour la logique Skyhook de confort.

Le calculateur CSS calcule ensuite la grandeur ER de commande de l'actionneur M de l'amortisseur AM de la roue A et des autres roues B, C, D en fonction de ces vitesses modales calculées $\dot{z}G$, $\dot{\theta}$ et $\dot{\varphi}$, et fournit les grandeurs ER de commande ainsi calculées aux actionneurs M correspondants sur leur entrée COM de commande.

Commande de type « Skyhook »

On décrit ci-dessous le calcul d'un gain modal $b_{mod}$ d'amortissement variable et d'un premier effort $F_{mod}$ modal de consigne de l'amortisseur pour la commande de l'amortisseur de type confort ou « Skyhook ».

Cette logique de type Skyhook utilise les premières vitesses modales absolues de caisse, $\dot{z}G$ en pompage, $\dot{\theta}$ en roulis, $\dot{\varphi}$ en tangage produites par le module 10, symbolisées par le signe général $V_{mod}$ dans ce qui suit.

Niveau de mouvement de la caisse et niveau de tressautement de la caisse

Un estimateur 24 est prévu pour calculer, en fonction des débattements DEB des roues, un niveau NMC de mouvement de la caisse et un niveau NTC de tressautement de la caisse.

A la figure 9, le niveau NMC de mouvement de la caisse et le niveau NTC de tressautement de la caisse sont obtenus dans l'estimateur 24 par :

- calcul de la moyenne DEBAVMOY des débattements des roues avant A, B,
- filtrage de la moyenne DEBAVMOY des débattements avant par un filtre passe-bande PB3, pour obtenir une grandeur filtrée DEBAVMOYF,
- prise de la valeur absolue de la grandeur filtrée DEBAVMOYF, dans un module redresseur RED, pour obtenir une grandeur redressée | DEBAVMOYF |,
- maintien des maxima de la grandeur redressée |DEBAVMOYF | dans un module MMAX de maintien, fournissant le niveau NMC de mouvement de la caisse.

Pour le calcul du niveau NMC de mouvement de la caisse, le filtre passe-bande PB3 est réglé pour laisser passer les fréquences des mouvements de la caisse, qui sont relativement basses. Le filtre passe-bande PB3 des mouvements de la caisse est par exemple réglé de 0,5 à 2,5 Hz et est proche de la fréquence de résonance de la suspension. Il peut par exemple être choisi entre deux pentes pour obtenir un niveau NMC de mouvement atténué et un niveau NMC de mouvement non atténué.

Pour le calcul du niveau NTC de tressautement de la caisse, le filtre passe-bande PB3 est réglé pour laisser passer les fréquences des tressautements de la caisse, qui sont relativement grandes. Le filtre passe-bande PB3 des tressautements de la caisse est par exemple réglé avec une fréquence de coupure basse de 3 Hz et une fréquence de coupure haute de 8 Hz ou plus. Il peut par exemple être choisi entre deux pentes pour obtenir un niveau NTC de tressautement atténué et un niveau NTC de tressautement non atténué.

Le module MMAX de maintien peut avoir une pente paramétrable de descente et une temporisation paramétrable de maintien des maxima. La temporisation de maintien des maxima est choisie plus courte pour l'obtention du niveau NTC de tressautement de la caisse que pour l'obtention du niveau NMC de mouvement de la caisse.

12

Efforts modaux de consigne Skyhook et gains modaux

Un estimateur 21 est prévu pour calculer les gains modaux $b_{mod}$ d'amortissement variable et les premiers efforts modaux $F_{mod}$ de consigne d'amortissement selon la formule $F_{mod} = - b_{mod} \cdot V_{mod}$.

Il y a donc :

- un gain modal de pompage $b_z$ pour calculer le premier effort modal de pompage

$$F_{z1} = -b_z \cdot \dot{z}G$$

- un gain modal de roulis $b_\theta$ pour calculer le premier effort modal de roulis

$$F_{\theta1} = -b_\theta \cdot \dot{\theta}$$

- un gain modal de tangage $b_\varphi$ pour calculer le premier effort modal de tangage $F_{\varphi1} = -b_\varphi \cdot \dot{\varphi}$

Les gains modaux $b_z$, $b_\theta$, $b_\varphi$ sont variables en fonction des débattements DEB des roues A, B, C, D et sont calculés par l'estimateur 21 en fonction de grandeurs qui ont été calculées précédemment en fonction de ces débattements DEB des roues A, B, C, D.

Les gains modaux $b_z$, $b_\theta$, $b_\varphi$ peuvent comprendre un ou plusieurs coefficients multiplicatifs, avec par exemple les coefficients multiplicatifs suivants :

- un coefficient multiplicatif de référence $b_{zREF}$, $b_{\theta REF}$, $b_{\varphi REF}$, respectivement en pompage, en roulis et en tangage,
- un coefficient multiplicatif d'atténuation $b_{zATT}$, $b_{\theta ATT}$, $b_{\varphi ATT}$ en pompage, en roulis et en tangage,
- un coefficient multiplicatif de recalage $b_{zREc}$, $b_{\theta REc}$, $b_{\varphi REC}$, respectivement en pompage, en roulis et en tangage,
- un coefficient multiplicatif de type de conduite $b_{zTYP}$, $b_{\theta TYP}$, $b_{\varphi TYP}$, respectivement en pompage, en roulis et en tangage.

Dans le mode de réalisation représenté à la figure 6, l'estimateur 21 reçoit en entrée les grandeurs suivantes :

- le niveau NMC de mouvement de la caisse fourni par l'estimateur 24,
- le niveau NTC de tressautement de la caisse fourni par l'estimateur 24,
- la vitesse VVH du véhicule,
- les raideurs modales fournies par l'estimateur 24 : la raideur modale en pompage $k_z$, la raideur modale en tangage $k_\varphi$ et la raideur modale en roulis $k_\theta$,
- les vitesses modales $V_{mod}$ fournies par le module 10 : la vitesse modale $\dot{z}G$ en pompage de caisse, la vitesse modale $\dot{\theta}$ en roulis de caisse, la vitesse modale $\dot{\varphi}$ en tangage de caisse,
- les moments modaux d'inertie fournis par l'estimateur 20 : le moment d'inertie en roulis $I_\theta$ et le moment d'inertie en tangage $I_\varphi$,
- la masse suspendue MSUS fournie par l'estimateur 20,
- une information IS de sportivité, pouvant être à un état booléen 0 d'absence de sportivité, ou à un autre état booléen 1 de sportivité, selon l'actionnement d'un bouton correspondant du tableau de bord du véhicule par son conducteur dans une position respectivement de conduite sportive ou d'absence de conduite sportive.

Pour chacun des gains modaux $b_z$, $b_\theta$, $b_\varphi$, le coefficient multiplicatif de référence $b_{zREF}$, $b_{\theta REF}$, $b_{\varphi REF}$, respectivement en pompage, en roulis et en tangage, est obtenu en extrayant d'une table ou courbe de référence préenregistrée donnant le coefficient multiplicatif de référence en fonction de la vitesse du véhicule, la valeur $b_{zREF}$, $b_{\theta REF}$, $b_{\varphi REF}$ du coefficient multiplicatif de référence, qui correspond à la valeur entrée VVH de la vitesse du véhicule, par exemple par interpolation linéaire.

Pour chacun des gains modaux $b_z$, $b_\theta$, $b_\varphi$, le coefficient multiplicatif d'atténuation $b_{zATT}$, $b_{\theta ATT}$, $b_{\varphi ATT}$, respectivement en pompage, en roulis et en tangage, est obtenu

- en calculant une résistance $R_z$, $R_\theta$, $R_\varphi$, respectivement en pompage, en roulis et en tangage en fonction du niveau NMC de mouvement de la caisse et du niveau NTC de tressautement de la caisse, par la formule :

$$R_z = NTC - \beta_z.NMC$$

$$R_\theta = NTC - \beta_\theta.NMC$$

$$R_\varphi = NTC - \beta_\varphi.NMC$$

Où $\beta_z$, $\beta_\theta$, $\beta_\varphi$ sont des paramètres préenregistrés permettant de régler le rapport entre les deux niveaux NMC et NTC, ces paramètres $\beta_z$, $\beta_\theta$, $\beta_\varphi$ étant par exemple réglés entre 0,5 et 1 ;

- en extrayant d'une table ou courbe préenregistrée donnant le coefficient multiplicatif d'atténuation $b_{zATT}$, $b_{\theta ATT}$, $b_{\varphi ATT}$ en fonction de la résistance respectivement en pompage, en roulis et en tangage, la valeur $b_{zATT}$, $b_{\theta ATT}$, $b_{\varphi ATT}$ du coefficient multiplicatif d'atténuation, qui correspond à la valeur calculée de la résistance $R_z$, $R_\theta$, $R_\varphi$, respectivement en pompage, en roulis et en tangage, par exemple par interpolation linéaire.

Le coefficient multiplicatif d'atténuation $b_{zATT}$, $b_{\theta ATT}$, $b_{\varphi ATT}$ en pompage, en roulis et en tangage est par exemple donné par la formule :

$$b_{zATT} = 1/(1+a_z.R_z)$$

$$b_{\theta ATT} = 1/(1+a_\theta.R_\theta)$$

$$b_{\varphi ATT} = 1/(1+a_\varphi.R_\varphi)$$

où $a_z$, $a_\theta$, $a_\varphi$ sont des paramètres préenregistrés.

La valeur obtenue de $b_{zATT}$, $b_{\theta ATT}$, $b_{\varphi ATT}$ n'est par exemple retenue que si la résistance $R_z$, $R_\theta$, $R_\varphi$ associée est supérieure à un seuil prescrit. Si la résistance $R_z$, $R_\theta$, $R_\varphi$ associée est inférieure ou égale à ce seuil prescrit, on prend 1 comme coefficient multiplicatif d'atténuation $b_{zATT}$, $b_{\theta ATT}$, $b_{\varphi ATT}$.

Pour chacun des gains modaux $b_z$, $b_\theta$, $b_\varphi$, le coefficient multiplicatif de recalage $b_{zREC}$, $b_{\theta REC}$, $b_{\varphi REC}$, respectivement en pompage, en roulis et en tangage, est obtenu par la formule

$$b_{zREC} = \sqrt{\frac{k_z \cdot MSUS}{k_{zREF} \cdot MREF}}$$

$$b_{\theta REC} = \sqrt{\frac{k_\theta \cdot I_\theta}{k_{\theta REF} \cdot I_{\theta REF}}}$$

$$b_{\varphi REC} = \sqrt{\frac{k_\varphi \cdot I_\varphi}{k_{\varphi REF} \cdot I_{\varphi REF}}}$$

où $k_{zRFF}$ est une raideur de référence en pompage, constante,
$k_{\theta REF}$ est une raideur de référence en roulis, constante,
$k_{\varphi REF}$ est une raideur de référence en tangage, constante,
$I_{\theta REF}$ est un moment d'inertie de référence en roulis, constant,
$I_{\varphi REF}$ est un moment d'inertie de référence en tangage, constant,

$k_{zREF}$, $k_{\theta REF}$, $k_{\varphi REF}$, $MREF$, MREF, $I_{\theta REF}$, $I_{\varphi REF}$ sont des paramètres préenregistrés, correspondant à un chargement normalisé du véhicule, comme par exemple quatre personnes de 67 kg dans l'habitacle du véhicule et 28 kg de bagages dans le coffre arrière.

Pour chacun des gains modaux $b_z$, $b_\theta$, $b_\varphi$, le coefficient multiplicatif de type de conduite $b_{zTYP}$, $b_{\theta TYP}$, $b_{\varphi TYP}$, respectivement en pompage, en roulis et en tangage, est égal à un gain préenregistré de sportivité $GS_z$, $GS_\theta$, $GS_\varphi$, si l'information IS de sportivité est à l'état booléen 1 de sportivité et est égal à 1, si l'information IS de sportivité est à l'état booléen 0 d'absence de sportivité.

Les gains modaux $b_z$, $b_\theta$, $b_\varphi$ sont calculés en fonction des coefficients multiplicatifs selon les formules :

$$\mathbf{b_z = b_{zREF} \cdot b_{zATT} \cdot b_{zREC} \cdot b_{zTYP}}$$

$$\mathbf{b_\theta = b_{\theta REF} \cdot b_{\theta ATT} \cdot b_{\theta REC} \cdot b_{\theta TYP}}$$

$$\mathbf{b_\varphi = b_{\varphi REF} \cdot b_{\varphi ATT} \cdot b_{\varphi REC} \cdot b_{\varphi TYP}}$$

Le premier effort modal de pompage $F_{z1}$, le premier effort modal de roulis $F_{\theta 1}$, le premier effort modal de tangage $F_{\varphi 1}$ sont calculés et sont également appelés efforts modaux de confort ou « skyhook ». Le premier effort modal de pompage $F_{z1}$, le premier effort modal de roulis $F_{\theta 1}$, le premier effort modal de tangage $F_{\varphi 1}$ sont fournis sur une sortie de l'estimateur 21.

Logique Roadhook

Ci-dessous est décrit la logique de type Roadhook, c'est-à-dire qui suit le profil de la route, cette logique étant également appelée logique de tenue de caisse ou logique de comportement.

Le principe de cette logique de tenue de caisse est de faire tendre vers zéro ou de minimiser l'une ou plusieurs des accélérations modales de la caisse par rapport au plan des roues : accélération modale en pompage, accélération modale en roulis, accélération modale en tangage.

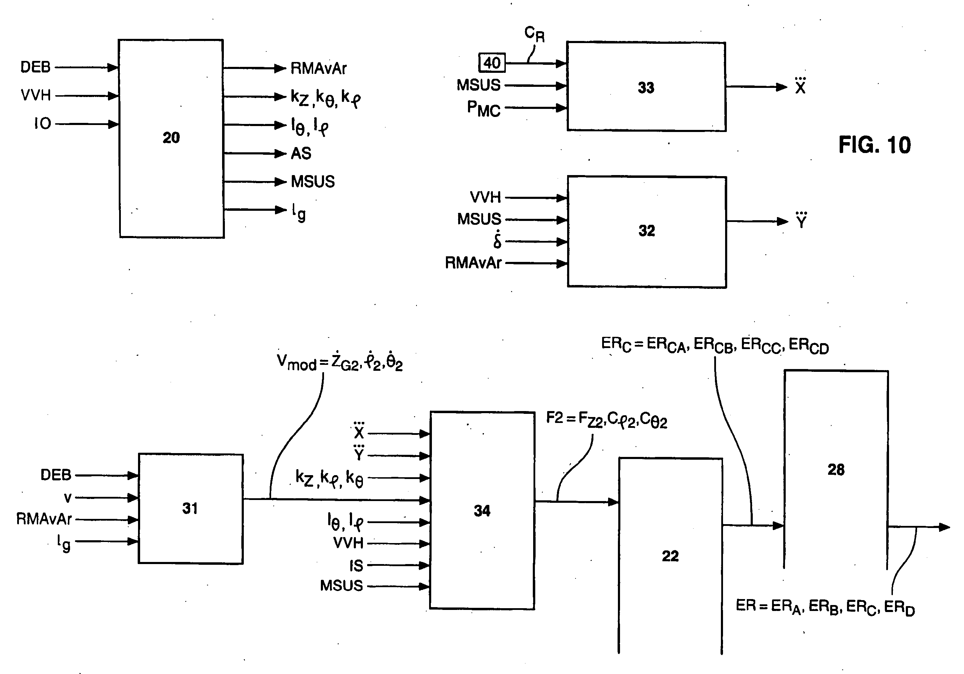

A la figure 10, le dispositif comporte un estimateur 31 des vitesses modales $V_{mod2}$ de la caisse par rapport au plan moyen des roues en fonction des débattements DEB mesurés des roues A, B, C, D. Ces vitesses modales $V_{mod2}$ par rapport au plan moyen des roues sont appelées vitesses relatives et comprennent la vitesse modale relative $\dot{z}_{G2}$ de caisse en pompage, la vitesse modale relative $\dot{\varphi}_2$ de caisse en tangage et la vitesse modale relative $\dot{\theta}_2$ de caisse en roulis.

Cet estimateur 31 des vitesses modales relatives $V_{mod2}$ reçoit en entrée :

- les débattements DEB mesurés sur les roues A, B, C, D,
- la voie v,
- au moins deux des paramètres suivants : la valeur de répartition de masse RMAvAr entre l'avant et l'arrière, la longueur lg séparant le centre de gravité G de l'axe des roues avant A, B, et l'empattement e.

Les débattements DEB sont d'abord filtrés dans un filtre passe-bas, par exemple d'ordre 2 et de type Butterworth, pour n'obtenir que les débattements basses fréquences et éliminer dans une large mesure les tressautements hautes fréquences.

Puis, un dérivateur dérive les débattements DEB ainsi filtrés pour obtenir les vitesses de débattement Roadhook des roues A, B, C, D.

Les vitesses modales relatives $V_{mod2}$ sont ensuite calculées selon les formules suivantes :

- vitesse modale relative de caisse en pompage par rapport au plan moyen des roues :

$$\dot{z}_{G2} = \frac{(e - \lg)}{e}\frac{\dot{d}_A + \dot{d}_B}{2} + \frac{\lg}{e}\frac{\dot{d}_C + \dot{d}_D}{2}$$

- vitesse modale relative de caisse en tangage par rapport au plan moyen des roues :

$$\dot{\varphi}_2 = \frac{\dot{d}_A + \dot{d}_B - \dot{d}_C - \dot{d}_D}{2e}$$

- vitesse modale relative de caisse en roulis par rapport au plan moyen des roues :

$$\dot{\theta}_2 = \frac{\dot{d}_A - \dot{d}_B - \dot{d}_C + \dot{d}_D}{2v}$$

avec

$d_A$ = vitesse de débattement VDEB de la roue A avant gauche,
$\dot{d}_B$ = vitesse de débattement VDEB de la roue B avant droite,
$\dot{d}_C$ = vitesse de débattement VDEB de la roue C arrière droite,
$\dot{d}_D$ = vitesse de débattement VDEB de la roue D arrière gauche.

Jerk transversal anticipé

Un estimateur 32 est prévu pour calculer un jerk transversal anticipé $\dddot{Y}$ (dérivée troisième de la coordonnée Y par rapport au temps) à partir de la vitesse VVH mesurée du véhicule et de la vitesse de rotation $\dot{\delta}$ du volant de direction du véhicule, où $\delta$ est l'angle de rotation mesuré de ce volant, mesuré par tout capteur ou moyen approprié.
Cet estimateur 32 reçoit en entrée :

- la masse suspendue MSUS,
- la valeur de répartition de masse RMAvAr entre l'avant et l'arrière,
- la vitesse WH du véhicule,
- la vitesse de rotation $\dot{\delta}$ du volant de direction.

Le jerk transversal anticipé $\dddot{Y}$ est estimé selon la formule :

$$\dddot{Y} = \frac{D\dot{\delta}.VVH^2}{e(1 + K.VVH^2)}$$

où D est la démultiplication du volant de direction et K est une constante de gain de surbraquage, calculée en fonction de la valeur de répartition de masse RMAvAr entre l'avant et l'arrière et de la masse suspendue MSUS. Le gain K de surbraquage est une grandeur du véhicule, déterminée par des mesures sur le véhicule.

Couple moteur anticipé aux roues

Un estimateur 40 est prévu pour calculer ce couple moteur anticipé aux roues, désigné par $C_R$.
Pour ce faire, on estime le numéro i du rapport embrayé $R_{EMBR}(i)$ de la boîte de vitesse du véhicule, qui va par exemple de 1 à 5.
On calcule le vitesse VVH1 qu'aurait le véhicule à une vitesse de rotation prescrite $\omega_{MOT1}$ du moteur, qui ne dépend en position embrayée que du rapport $R_{EMBR}$ engagé, selon la formule

$$VVH1 = VVH. \omega_{MOT1} / \omega_{MOT}$$

où $\omega_{MOT}$ est la vitesse de rotation du moteur à la vitesse VVH du véhicule. Par exemple, $\omega_{MOT1}$ = 1000 tours / minute.

On calcule pour chaque rapport i d'embrayage, les paramètres $P_i$=0,5. (VVH1(i)+VVH1(i+1)).

En comparant WH1 à $P_i$ et en retenant la valeur $P_i$ la plus proche de VVH1, on déduit le rapport i d'embrayage.

Le couple moteur anticipé $C_R$ aux roues est alors :

$$C_R = C_M \cdot R_{EMBR}(i),$$

avec $R_{EMBR}(i) = \omega_{MOT}/\omega_{ROUE}$

Où $R_{EMBR}(i)$ est le rapport d'embrayage ayant le numéro i,

$C_M$ est le couple moteur déterminé par tout moyen approprié, par exemple par un calculateur du contrôle moteur.

$\omega_{ROUE}$ est la vitesse de rotation des roues.

Jerk longitudinal anticipé

Un estimateur 33 est prévu pour calculer un jerk longitudinal anticipé $\dddot{X}$ (dérivée troisième de la coordonnée X par rapport au temps) à partir de la dérivée du couple moteur anticipé et de la dérivée $\dot{P}_{MC}$ de la pression $P_{MC}$ du maître cylindre.

Cet estimateur 33 reçoit en entrée :

- la masse suspendue MSUS,
- la pression $P_{MC}$ du maître cylindre,
- le couple moteur anticipé aux roues $C_R$.

Le calcul est effectué de la manière suivante.

On extrait d'abord d'une table ou courbe préenregistrée donnant un effort de freinage du maître cylindre en fonction de la pression du maître cylindre, la valeur EFR de cet effort de freinage correspondant à la pression $P_{MC}$ du maître cylindre, par exemple par interpolation linéaire. On applique ensuite un filtre passe-bas, par exemple d'ordre 1 de type Butterworth, à cet effort EFR de freinage, et on dérive dans un dérivateur l'effort EFR de freinage ainsi filtré pour obtenir la dérivée $\dot{E}_{FRF}$ de l'effort EFR filtré.

On calcule un effort anticipé du moteur aux roues EMR, égal au couple moteur anticipé aux roues $C_R$, divisé par un rayon moyen Rmoy des roues, prédéterminé et préenregistré. On applique ensuite un filtre passe-bas, par exemple d'ordre 1 de type Butterworth, à cet effort EMR anticipé du moteur aux roues, et on dérive dans un dérivateur l'effort EMR anticipé du moteur ainsi filtré pour obtenir la dérivée $\dot{E}_{MRF}$ de l'effort EMR filtré.

Le jerk longitudinal anticipé $\dddot{X}$ est alors égal à la somme des dérivées $\dot{E}_{FRF}$, $\dot{E}_{MRF}$, divisée par la masse totale MTOT :

$$\dddot{X} = \frac{\dot{E}_{FRF} + \dot{E}_{MRF}}{MTOT}$$

Dans cette formule, la masse totale MTOT inclut la masse suspendue MSUS, peut inclure la masse des roues et peut être bornée entre deux seuils.

Ces jerks $\dddot{Y}$ et $\dddot{X}$ sont estimés et ne proviennent pas d'une dérivation d'accéléromètres, trop bruités et trop en retard.

Termes d'efforts modaux anticipatifs

Un module 34 est prévu pour calculer des termes d'efforts modaux anticipatifs, à savoir :

- un couple modal anticipatif en tangage, désigné par $C\varphi_{2ant}$,
- un couple modal anticipatif en roulis, désigné par $C_{\theta 2ant}$.

Il n'est pas calculé d'effort modal anticipatif en pompage, étant donné que seul un effort modal correctif Roadhook agit en pompage, ainsi que cela sera décrit ci-dessous.

Dans le mode de réalisation représenté à la figure 11, l'estimateur 34 reçoit en entrée les grandeurs suivantes :

- le jerk transversal anticipé $\dddot{Y}_{|}$ fourni par l'estimateur 32,

- le jerk longitudinal anticipé $\dddot{X}$ fourni par l'estimateur 33,

- la vitesse VVH du véhicule,

- les raideurs modales fournies par l'estimateur 24: la raideur modale en pompage $k_z$, la raideur modale en tangage $k_\varphi$ et la raideur modale en roulis $k_\theta$,

- les vitesses modales relatives $V_{mod2}$ par rapport au plan moyen des roues, fournies par le module 31 : la vitesse modale relative $\dot{z}_{G2}$ en pompage de caisse, la vitesse modale relative $\dot{\theta}_2$ en roulis de caisse, la vitesse modale relative $\dot{\varphi}_2$ en tangage de caisse,

- les moments. modaux d'inertie fournis par l'estimateur 20 : le moment d'inertie en roulis $I_\theta$ et le moment d'inertie en tangage $I_\varphi$,

- la masse suspendue MSUS fournie par l'estimateur 20,

- l'information IS de sportivité.

Ainsi que cela est représenté à la figure 11, chacun de ces termes d'efforts modaux anticipatifs en tangage $c_{\varphi 2ant}$ et en roulis $c_{\theta 2ant}$ est calculé par traitement respectivement du jerk longitudinal anticipé $\dddot{X}$ et du jerk transversal anticipé $\dddot{Y}_{|}$, pour obtenir un jerk longitudinal anticipé traité $\dddot{X}_T$ et un jerk transversal anticipé $\dddot{Y}_T$, puis multiplication respectivement par un gain en sollicitation longitudinale $G_{SX}$ pour obtenir le couple modal anticipatif en tangage $c_{\varphi 2ant}$ et par un gain en sollicitation transversale $G_{SY}$ pour obtenir le couple modal anticipatif en roulis $c_{\theta 2ant}$ selon les formules :

$$c_{\varphi 2ant} = G_{SX} \cdot \dddot{X}_T$$

$$c_{\theta 2ant} = G_{SY} \cdot \dddot{Y}_T$$

Le gain en sollicitation longitudinale $G_{SX}$ et le gain en sollicitation transversale $G_{SY}$ sont des paramètres prédéterminés de mise au point, déterminés par des essais sur véhicule pour obtenir les bonnes prestations de tenue de caisse sous sollicitation du conducteur.

Cette mise en forme est décrite ci-dessous pour le calcul du couple modal anticipatif en tangage, désigné par $c_{\varphi 2ant}$ à partir du jerk longitudinal anticipé $\dddot{X}$ :

- passage du jerk longitudinal anticipé $\dddot{X}$ dans un filtre 341 d'annulation des faibles amplitudes, possédant un seuil haut positif SHJL d'activation de jerk longitudinal et un seuil bas négatif SBJL d'activation de jerk longitudinal, pour remplacer par des valeurs nulles les valeurs du jerk longitudinal anticipé $\dddot{X}$ situées entre le seuil haut d'activation de jerk longitudinal SHJL et le seuil bas d'activation de jerk longitudinal SBJL au cours du temps ;

- passage du jerk longitudinal anticipé $\dddot{X}$ filtré, issu du filtre 341, dans un module 342 de maintien des maxima, pouvant avoir une temporisation paramétrable de maintien des maxima, pour obtenir un jerk filtré et maintenu à ses maxima, désigné par $\dddot{X}_{f\,max}$ ,

- passage du jerk $\dddot{X}_{f\,max}$ filtré et maintenu à ses maxima, issu du module 342, dans un module 343 limiteur de pente, limitant en valeur absolue la pente de la descente du jerk $\dddot{X}_{f\,max}$ filtré et maintenu à ses maxima, pour obtenir le jerk longitudinal anticipé traité $\dddot{X}_T$ , puis multiplication respectivement par le gain en sollicitation longitudinale $G_{SX}$ pour obtenir le couple modal anticipatif en tangage $c_{\varphi 2ant}$.

La temporisation doit être suffisamment longue pour que le terme correctif Roadhook (voir supra) ait le temps de devenir significatif sur action simple (mise en virage simple, freinage ou accélération) et être suffisamment courte pour ne pas perturber le fonctionnement Roadhook et pour ne pas demander d'amortissement inutile.

Le passage du jerk transversal anticipé $\dddot{Y}_f$ dans le filtre 341 d'annulation, ayant son seuil haut positif SHJT d'activation de jerk transversal et son seuil bas négatif SBJT d'activation de jerk transversal, puis dans le module 342 de maintien des maxima produit un jerk filtré et maintenu à ses maxima, désigné par $\dddot{Y}_{f\,max}$, qui est envoyé au module 343 limiteur de pente ayant le gain en sollicitation transversale $G_{SY}$ pour fournir en sortie le couple modal anticipatif en roulis $c_{\theta 2ant}$. Les seuils hauts SHJT et SHJL peuvent être égaux et opposés aux seuils bas égaux SBJT et SBJL. Ces seuils sont paramétrables et sont un compromis entre la limitation des actions intempestives et le non traitement des petites sollicitations. De préférence, chacun des seuils SHJT, SHJL, SBJT et SBJL est compris entre 1 et 10 m.s$^{-3}$.

Le fait d'utiliser des termes anticipatifs permet de gagner en temps de réponse pour placer les actionneurs dans le bon état avant que la caisse ait le temps de prendre de la vitesse. Il en résulte une amélioration notable de la tenue de caisse.

Termes d'effort modaux correctifs

Le module 34 calcule également, en fonction de la vitesse modale relative $V_{mod2} = \dot{z}_{G2}, \dot{\varphi}_2, \dot{\theta}_2$ par rapport au plan moyen des roues, au moins un deuxième terme d'effort modal correctif $F_{2COR}$ selon la formule générale

$$F_{2COR} = - b_{mod2} . V_{mod2}$$

à savoir:

- une deuxième force modale corrective en pompage, désignée par $F_{z2cors}$,
- un deuxième couple modal correctif en tangage, désigné par $C_{\varphi p2cor}$,
- un deuxième couple modal correctif en roulis, désigné par $C_{\theta 2cor}$ selon les formules :

$$F_{z2cor} = -b_{z2} . \dot{z}_{G2}$$

$$C_{\varphi 2cor} = -b_{\varphi 2} . \dot{\varphi}_2$$

$$C_{\theta 2cor} = -b_{\theta 2} . \dot{\theta}_2$$

où $b_{mod2}$ est un deuxième gain modal correctif,
$b_{z2}$ est un deuxième gain modal correctif de pompage pour calculer la deuxième force modale corrective en pompage $F_{z2cor}$,
$b_{\theta 2}$ est un deuxième gain modal correctif de roulis pour calculer le deuxième couple modal correctif en roulis $C_{\theta 2cor}$,
$b_{\varphi 2}$ est un deuxième gain modal correctif de tangage pour calculer le deuxième couple modal correctif en tangage $C_{\varphi 2cor}$.

Les deuxièmes gains modaux correctifs $b_{z2}$, $b_{\theta 2}$, $b_{\varphi 2}$ peuvent comprendre un ou plusieurs coefficients multiplicatifs, avec par exemple les coefficients multiplicatifs suivants :

- un deuxième coefficient multiplicatif de référence $b_{zREF2}$, $b_{\theta REF2}$, $b_{\varphi REF2}$, respectivement en pompage, en roulis et en tangage,
- un deuxième coefficient multiplicatif de recalage $b_{zREC2}$, $b_{\theta REC2}$, $b_{\varphi REC2}$, respectivement en pompage, en roulis et en tangage,
- un deuxième coefficient multiplicatif de type de conduite $b_{zTYP2}$, $b_{\theta TYP2}$, $b_{\varphi TYP2}$, respectivement en pompage, en roulis et en tangage.

Pour chacun des deuxièmes gains modaux $b_{z2}$, $b_{\theta2}$, $b_{\varphi2}$, le deuxième coefficient multiplicatif de référence $b_{zREF2}$, $b_{\theta REF2}$, $b_{\varphi REF2}$, respectivement en pompage, en roulis et en tangage, est obtenu en extrayant d'une deuxième table ou courbe de référence, préenregistrée pour la logique Roadhook, donnant le deuxième coefficient multiplicatif de référence en fonction de la vitesse du véhicule, la valeur $b_{zREF2}$, $b_{\theta REF2}$, $b_{\varphi REF2}$ du deuxième coefficient multiplicatif de référence, qui correspond à la valeur entrée VVH de la vitesse du véhicule, par exemple par interpolation linéaire.

Pour chacun des deuxièmes gains modaux $b_{z2}$, $b_{\theta2}$, $b_{\varphi2}$, le deuxième coefficient multiplicatif de recalage $b_{zREC2}$, $b_{\theta REC2}$, $b_{\varphi REC2}$ est par exemple égal au premier coefficient multiplicatif de recalage $b_{zREC}$, $b_{\theta REC}$, $b_{\varphi REC}$ respectivement en pompage, en roulis et en tangage, décrit ci-dessus :

$$b_{zREC2} = b_{zREC}\ ,\ b_{\theta REC2} = b_{\theta REC},\ b_{\varphi REC2} = b_{\varphi REC}.$$

Pour chacun des deuxièmes gains modaux $b_z$, $b_\theta$, $b_\varphi$, le deuxième coefficient multiplicatif de type de conduite $b_{zTYP2}$, $b_{\theta TYP2}$, $b_{\varphi TYP2}$, respectivement en pompage, en roulis et en tangage, est par exemple égal au premier coefficient multiplicatif de type de conduite $b_{zTYP}$, $b_{\theta TYP}$, $b_{\varphi TYP}$, décrit ci-dessus :

$$b_{zTYP2} = b_{zTYP}\ ,\ b_{\theta TYP2} = b_{\theta TYP},\ b_{\varphi TYP2} = b_{\varphi TYP}.$$

Les deuxièmes gains modaux correctifs $b_{z2}$, $b_{\theta2}$, $b_{\varphi2}$ sont calculés en fonction des deuxièmes coefficients multiplicatifs selon les formules :

$$b_{z2} = b_{zREF2} \cdot b_{zREC2} \cdot b_{zTYP2}$$

$$b_{\theta2} = b_{\theta REF2} \cdot b_{\theta REC2} \cdot b_{\theta TYP2}$$

$$b_{\varphi2} = b_{\varphi REF2} \cdot b_{\varphi REC2} \cdot b_{\varphi TYP2}$$

Efforts modaux Roadhook

L'estimateur 34 fait ensuite

- la synthèse entre le couple modal anticipatif en tangage $C_{\varphi2ant}$ et le deuxième couple modal correctif en tangage $C_{\varphi2cor}$, pour obtenir en sortie le deuxième couple ou effort modal $C_{\varphi2}$ de tangage,
- la synthèse entre le couple modal anticipatif en roulis $C_{\theta2ant}$ et le deuxième couple modal correctif en roulis $C_{\theta2cor}$, pour obtenir en sortie le deuxième couple ou effort modal $C_{\theta2}$ de roulis.

La deuxième force modale corrective en pompage, désignée par $F_{z2cor}$ est prise en sortie comme deuxième force ou effort modal $F_{z2}$ de pompage $F_{z2} = F_{z2cor}$.

Ces deuxièmes efforts $C_{\varphi2}$, $C_{\theta2}$ et $F_{z2}$ sont appelés efforts modaux de comportement ou de tenue de route ou « Roadhook ».

La synthèse est effectuée par choix du terme anticipatif ou du terme correctif en fonction de leurs valeurs, de la manière décrite dans le tableau ci-dessous.

| Terme Anticipatif → Terme correctif↓ | Petit | Grand |
|---|---|---|
| Petit | Cas 1 : Terme correctif | Cas 3 : Terme anticipatif |
| Grand | Cas 2 : Terme correctif | Cas 4 :<br>- Maximum des 2 si de même signe<br>- Terme correctif si signes opposés |

Pour l'obtention du deuxième effort modal $C_{\varphi2}$ de tangage, celui-ci est égal

- au deuxième couple modal correctif en tangage $C_{\varphi2cor}$, lorsque la valeur absolue du couple anticipatif en tangage $C_{\varphi2ant}$ est inférieure ou égale à une première valeur prescrite de tangage $V1\varphi$, (cas 1 et 2 dans le tableau, correspondant au terme anticipatif petit),
- au couple modal anticipatif en tangage $C_{\varphi2ant}$, lorsque la valeur absolue du couple anticipatif en tangage $C_{\varphi2ant}$ est supérieure à la première valeur prescrite de tangage $V1\varphi$, et lorsque la valeur absolue du couple modal correctif en tangage $C_{\varphi2cor}$ est inférieure ou égale à une deuxième valeur prescrite de tangage $V2\varphi$ (cas 3 dans le tableau, correspondant au terme correctif petit et au terme anticipatif grand).

Si la valeur absolue du couple anticipatif en tangage $C_{\varphi2ant}$ est supérieure à la première valeur prescrite de tangage $V1\varphi$ et si la valeur absolue du couple modal correctif en tangage $C_{\varphi2cor}$ est supérieure à la deuxième valeur prescrite de tangage $V_{2\varphi}$ (cas 4 dans le tableau, correspondant au terme correctif grand et au terme anticipatif grand),

- si le couple modal correctif en tangage $C_{\varphi2cor}$ et le couple anticipatif en tangage $C_{\varphi2ant}$ ont le même signe, le deuxième effort modal $C_{\varphi2}$ de tangage est égal à $\max(|c_{\varphi2cor}|, |c_{\varphi2ant}|).\mathrm{sgn}(c_{\varphi2ant})$,
  Où sgn désigne la fonction signe et max la fonction maximum, et
- si le couple modal correctif en tangage $c_{\varphi2cor}$ et le couple anticipatif en tangage $c_{\varphi2ant}$ n'ont pas le même signe, le deuxième effort modal $c_{\varphi2}$ de tangage est égal au couple modal correctif en tangage $c_{\varphi2cor}$.

L'obtention du deuxième effort modal $c_{\theta2}$ de roulis est analogue à ce qui précède, à partir de $c_{\theta2cor}$ et $c_{\theta2ant}$, au lieu de $c_{\varphi2cor}$ et $c_{\varphi2ant}$, avec une première valeur prescrite de roulis $V1\theta$ au lieu de $V1\varphi$, et une deuxième valeur prescrite de roulis $V2\theta$ au lieu de $V2\varphi$.

Synthèse entre Skyhook et Roadhook

Le premier effort modal de pompage $F_{z1}$, le premier effort modal de roulis $F_{\theta1}$ et le premier effort modal de tangage $F_{\varphi1}$ fournis par l'estimateur 21 (efforts modaux de confort par la logique Skyhook, désignés d'une manière générale par premiers efforts modaux F1 de consigne), ainsi que le deuxième effort modal $F_{z2}$ de pompage, le deuxième effort modal $C_{\theta2}$ de roulis et le deuxième effort modal $C_{\varphi2}$ de tangage fournis par l'estimateur 34 (efforts modaux de comportements par la logique Roadhook, désignés d'une manière générale par deuxièmes efforts modaux F2 de consigne), sont envoyés à un estimateur 22 d'une force de consigne pour chaque amortisseur, soit pour les roues A, B, C, D, les forces de consigne FA1, FB1, FC1, FD1.
Pour chaque mode, l'estimateur 22 pondère le premier effort F1 de confort et le deuxième effort F2 de comportement pour calculer l'effort modal F de consigne.
L'estimateur 22 calcule :

- un effort modal $F = F_z$ de consigne en pompage, en fonction du premier effort de pompage $F_{z1}$ de confort, du deuxième effort de pompage $F_{z2}$ de comportement et d'un coefficient $\alpha$ de pondération, selon la formule :

$$F_z = \alpha \cdot F_{z2} + (1-\alpha) \cdot F_{z1}$$

- un effort modal $F = F_\varphi$ de consigne en tangage, en fonction du premier effort modal de tangage $F_{\varphi1}$ de confort, du deuxième effort modal $c_{\varphi2}$ de tangage de comportement et du coefficient $\alpha$ de pondération, selon la formule :

$$F_\varphi = \alpha \cdot c_{\varphi2} + (1-\alpha) \cdot F_{\varphi1}$$

- un effort modal $F = F_\theta$ de consigne en roulis, en fonction du premier effort modal de roulis $F_{\theta1}$ de confort, du deuxième effort modal $c_{\theta2}$ de roulis de comportement et du coefficient $\alpha$ de pondération, selon la formule :

$$F_\theta = \alpha \cdot c_{\theta2} + (1-\alpha) \cdot F_{\theta1}$$

La détermination de ce coefficient $\alpha$ de pondération en fonction de sollicitations détectées est décrite ci-dessous.
Le coefficient de pondération est normalement à 0 pour faire suivre aux efforts modaux de consigne les premiers efforts de confort $F_{z1}$, $F_{\theta1}$ et $F_{\varphi1}$ de la logique Skyhook.

Accélération longitudinale corrigée

L'accélération longitudinale corrigée $\ddot{X}_{COR}$ est calculée par un estimateur 25 à partir de l'accélération longitudinale mesurée ACCL, fournie par l'accéléromètre longitudinal CAPL.

L'estimateur 25 reçoit en entrée :

- la vitesse VVH mesurée du véhicule,
- la masse suspendue MSUS, fournie par l'estimateur 20,
- l'accélération longitudinale mesurée ACCL,
- la pression $P_{MC}$ du maître cylindre des freins, fournie par le capteur CAP-P,
- le couple moteur anticipé aux roues $C_R$, fourni par l'estimateur 40. Le calcul est effectué de la manière suivante.

On extrait d'abord de la table ou courbe préenregistrée donnant l'effort de freinage du maître cylindre en fonction de la pression du maître cylindre, la valeur EFR de cet effort de freinage correspondant à la pression $P_{MC}$ du maître cylindre, par exemple par interpolation linéaire.

On calcule l'effort anticipé du moteur aux roues EMR, égal au couple moteur anticipé aux roues $C_R$, divisé par un rayon moyen Rmoy des roues, prédéterminé et préenregistré.

On calcule un effort de traînée longitudinale ETR en fonction de la vitesse du véhicule VVH selon la formule :

$$ETR = COEF. \, (VVH)^2 + DEC$$

Où COEF est un coefficient prédéterminé et préenregistré et DEC est un décalage prédéterminé et préenregistré.

L'effort longitudinal total ELT est alors égal à la somme de l'effort EFR de freinage, de l'effort EMR anticipé du moteur aux roues et de l'effort ETR de traînée longitudinale :

$$ELT = EFR + EMR + ETR$$

On calcule la masse totale MTOT, qui inclut la masse suspendue MSUS, peut inclure la masse des roues et peut être bornée entre deux seuils.

L'accélération longitudinale anticipée $\ddot{X}_{ANT}$ est calculée en divisant l'effort longitudinal total ELT par la masse totale MTOT :

$$\ddot{X}_{ANT} = ELT / MTOT$$

L'accélération longitudinale anticipée $\ddot{X}_{ANT}$ est éventuellement ensuite bornée entre deux seuils.

L'accélération longitudinale corrigée $\ddot{X}_{COR}$ est ensuite calculée en

- calculant une évolution EVAL de l'accélération longitudinale, égale à l'accélération longitudinale anticipée $\ddot{X}_{ANT}$ à laquelle est soustraite l'accélération longitudinale mesurée ACCL :

$$EVAL = \ddot{X}_{ANT} - ACCL$$

- en appliquant à cette évolution EVAL de l'accélération longitudinale un filtre passe-haut PH, par exemple de type Butterworth d'ordre 1, pour obtenir l'évolution longitudinale EVAL filtrée, égale à $PH(\ddot{X}_{ANT} - ACCL)$,
- en additionnant l'évolution longitudinale EVAL filtrée à l'accélération longitudinale mesurée ACCL, pour obtenir l'accélération longitudinale corrigée $\ddot{X}_{COR}$ :

$$\ddot{X}_{COR} = ACCL + PH(\ddot{X}_{ANT} - ACCL)$$

La fréquence de coupure du filtre passe-haut PH permet de régler la vitesse de recalage de l'estimation sur la mesure.

Accélération transversale corrigée

L'accélération transversale corrigée $\ddot{Y}_{COR}$ est calculée par un estimateur 26 à partir de l'accélération transversale mesurée ACCT, fournie par l'accéléromètre transversal CAP-ACCT.

L'estimateur 26 reçoit en entrée :

- la masse suspendue MSUS,
- la valeur de répartition de masse RMAvAr entre l'avant et l'arrière,
- la vitesse VVH du véhicule,
- l'angle de rotation $\delta$ du volant de direction,
- l'accélération transversale mesurée ACCT.

L'accélération transversale anticipée $\ddot{Y}_{ANT}$ est estimée selon la formule :

$$\ddot{Y}_{ANT} = \frac{D.\delta.\dot{VVH}^2}{e(1 + K.VVH^2)}$$

où D est la démultiplication du volant de direction et K est la constante de gain de surbraquage, calculée en fonction de la valeur de répartition de masse RMAvAr entre l'avant et l'arrière et de la masse suspendue MSUS. La constante K de gain de surbraquage est une grandeur du véhicule, déterminée par des mesures sur le véhicule.

L'accélération longitudinale anticipée $\ddot{Y}_{ANT}$ est éventuellement ensuite bornée entre deux seuils.

L'accélération longitudinale corrigée $\ddot{Y}_{COR}$ est ensuite calculée en

- calculant une évolution EVAT de l'accélération transversale, égale à l'accélération transversale anticipée $\ddot{Y}_{ANT}$ à laquelle est soustraite l'accélération transversale mesuré ACCT :

$$EVAT = \ddot{Y}_{ANT} - ACCT$$

- en appliquant à cette évolution EVAT de l'accélération transversale un filtre passe-haut PH2, par exemple de type Butterworth d'ordre 1, pour obtenir l'évolution transversale EVAT filtrée, égale à PH($\ddot{Y}_{ANT}$– ACCT),
- en additionnant l'évolution transversale EVAT filtrée à l'accélération transversale mesuré ACCT, pour obtenir l'accélération transversale corrigée $\ddot{Y}_{COR}$ :

$$\ddot{Y}_{COR} = ACCT + PH2(\ddot{Y}_{ANT} - ACCT)$$

La fréquence de coupure du filtre passe-haut PH2 permet de régler la vitesse de recalage de l'estimation sur la mesure.

Détection des sollicitations et coefficient de pondération des efforts Skyhook et des efforts Roadhook

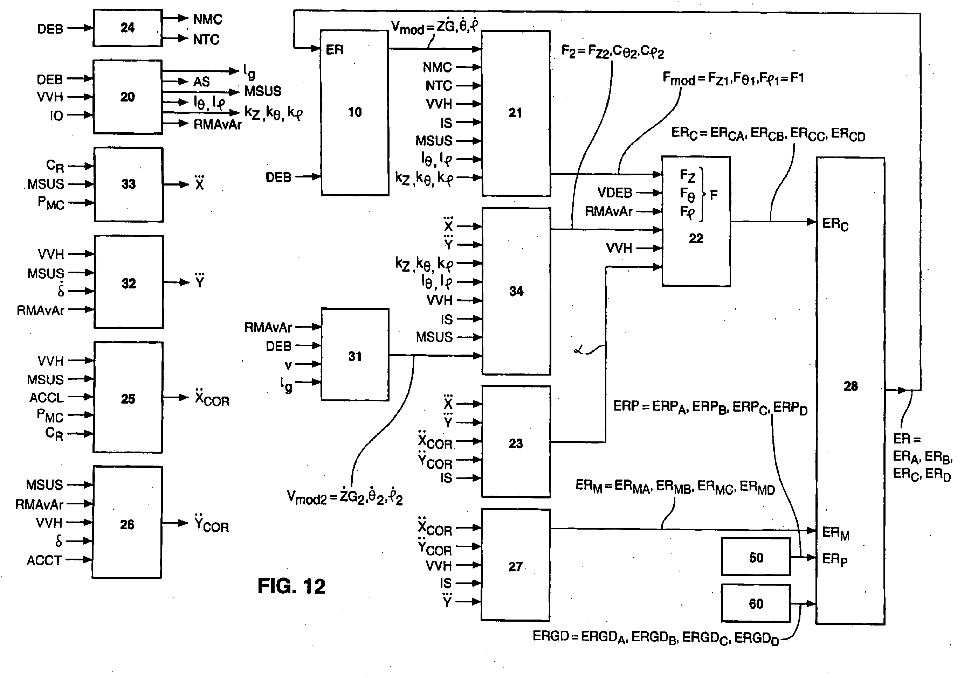

A la figure 12, un estimateur 23 calcule le coefficient $\alpha$ de pondération des premiers efforts de confort et des deuxièmes efforts de comportement.

L'estimateur 23 reçoit en entrée :

- le jerk longitudinal anticipé $\dot{X}$, fourni par l'estimateur 33,
- le jerk transversal anticipé $\dot{Y}$, fourni par l'estimateur 32,
- l'accélération longitudinale corrigée $\ddot{X}_{COR}$, fournie par l'estimateur 25,
- l'accélération transversale corrigée $\ddot{Y}_{COR}$, fournie par l'estimateur 26,
- l'information IS de sportivité.

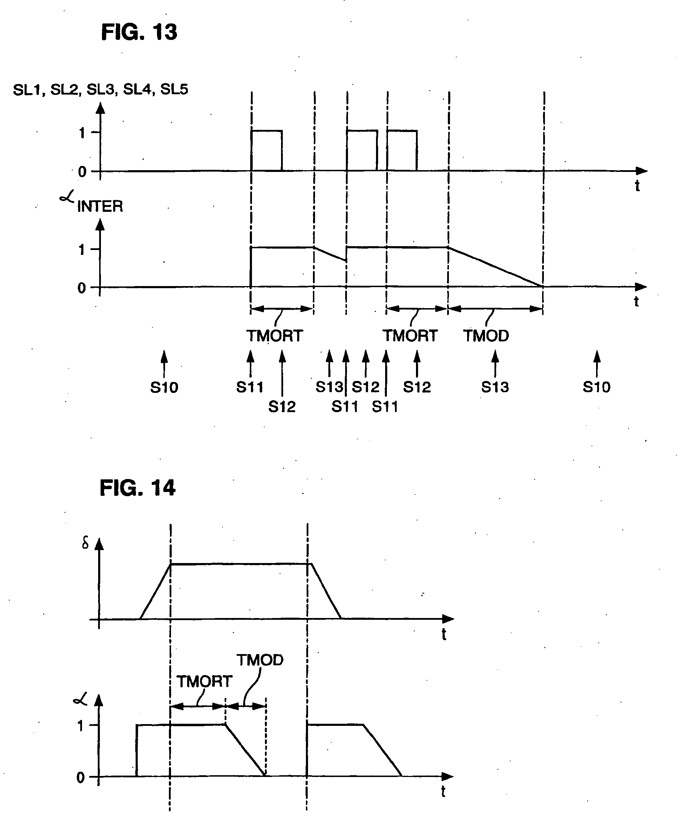

Par défaut, les premiers efforts de confort $F_{z1}$, $F_{\theta1}$ et $F_{\varphi1}$ de la logique Skyhook sont sélectionnés pour les efforts modaux de consigne, c'est-à-dire que le coefficient $\alpha$ de pondération est à 0. Les sollicitations sont détectées sur les valeurs prises par ces entrées. Dès qu'une sollicitation est détectée, le coefficient $\alpha$ de pondération passe en « tout comportement » ou Roadhook, c'est-à-dire à 1, pour sélectionner les deuxièmes efforts $F_{z2}$, $c_{\theta2}$ et $c_{\varphi2}$ de comportement comme efforts modaux de consigne. Si l'on détecte une stabilisation au sein d'une sollicitation, typiquement une grande courbe d'autoroute comme à la figure 14, il y a la possibilité de refaire passer le coefficient $\alpha$ de pondération progressivement à 0 en logique Skyhook pour favoriser le confort. Si, au sein de cette stabilisation, on détecte une variation des grandeurs accélérométriques, la répartition repasse immédiatement en 'tout 'comportement', c'est-à-dire à 1.

On crée un signal booléen 'sollicitation conducteur latérale' (SSOLT) et un signal booléen 'sollicitation conducteur longitudinale' (SSOLL) sur franchissement de seuils paramétrables d'accélération corrigée ou de jerk anticipé.

Le coefficient de pondération passe à 1 et on réinitialise la temporisation lorsque les événements suivants sont détectés :

- front montant de sollicitation conducteur longitudinale,
- front montant de sollicitation conducteur latérale,
- dépassement de seuil sur jerk longitudinal en sollicitation conducteur longitudinale,
- dépassement de seuil sur variation d'accélération longitudinale en sollicitation conducteur longitudinale,
- dépassement de seuil sur jerk latéral en sollicitation conducteur latérale,
- dépassement de seuil sur variation d'accélération latérale en sollicitation conducteur latérale.

L'estimateur 23 détermine en fonction de l'information IS de sportivité une modulation de seuil MODL longitudinale et une modulation de seuil MODT transversale.

Si l'information IS de sportivité est égale à 1, la modulation de seuil MODL longitudinale est égale à une valeur prescrite longitudinale plus petite que 1 et la modulation de seuil MODT transversale est égale à une valeur prescrite transversale plus petite que 1.

Si l'information IS de sportivité est égale à 0, la modulation de seuil MODL longitudinale est égale à 1 et la modulation de seuil MODT transversale est égale à 1.

On détermine ensuite des signaux de détection de sollicitations : un signal logique longitudinal SSOLL de sollicitation, un deuxième signal logique longitudinal SL2, un troisième signal logique longitudinal SL3, un signal logique transversal SSOLT de sollicitation, un quatrième signal logique transversal ST4 et un cinquième signal logique transversal ST5, de la manière suivante :

- si $|\ddot{X}_{COR}| >$ THAL$_1$. MODL
  ou

$$\left| \ddot{X} \right| > \text{THJL}_1 . \text{MODL}$$

- alors SSOLL = 1,
- sinon SSOLL = 0.
- si SSOLL=1 et $|\ddot{X}|$>THJL$_2$
  alors SL2 = 1,
- sinon SL2 = 0.
- l'accélération longitudinale $\gamma_L$ est initialisée à 0.
- si $|\ddot{X}_{COR}\text{-}\gamma_L|$>THAL$_2$·$|\gamma_L|$
  alors

  • $\gamma_L = \ddot{X}_{COR}$ est enregistrée pour le prochain calcul de SL3,
  • si SSOLL = 1 alors SL3 = 1 et sinon SL3 = 0,

- si $|\ddot{X}_{COR}\text{-}\gamma_L| \leq$ THAL$_2$·$|\gamma_L|$ alors SL3 = 0.
- si $|\ddot{Y}_{COR}|$>THAT$_1$. MODT
  ou

$$\left| \ddot{Y} \right| > \text{THJT}_1 . \text{MODT}$$

alors SSOLT = 1,
- sinon SSOLT = 0.
- si SSOLT = 1 et $|\dot{Y}| > THJT_2$
alors ST4 = 1,
- sinon ST4 = 0.
- l'accélération transversae $\gamma_T$ est initialisée à 0.
- si $| \dot{Y}_{COR} - \gamma_T | > THAT2 . | \gamma_T |$
alors

- • $\gamma_T = \dot{Y}_{COR}$ est enregistrée pour le prochain calcul de ST5,
  • si SSOLT= 1 alors ST5 = 1 et sinon ST5 = 0,

- si $| \dot{Y}_{COR} - \gamma_T | \leq THAT_2 . | \gamma_T |$ alors ST5 = 0.

$THAL_1$ est un premier seuil d'accélération longitudinale,
$THAL_2$ est un deuxième seuil de variation d'accélération longitudinale,
$THJL_1$ et $THJL_2$ sont des premier et deuxième seuils de jerk longitudinal,
$THAT_1$ est un premier seuil d'accélération transversale,
$THAT_2$ est un deuxième seuil de variation d'accélération transversale,
$THJT_1$ et $THJT_2$ sont des premier et deuxième seuils de jerk transversal, ces seuils étant préenregistrés.

Les états 1 des signaux de détection correspondent à des états de présence d'une sollicitation et les états 0 correspondent à des états d'absence de sollicitations.

Un signal logique SSOL de sollicitation du conducteur est déterminé comme étant égal à 1 si le premier signal logique longitudinal SSOLL de sollicitation est à 1 et/ou si le signal logique transversal SSOLT de sollicitation est à 1 (Opérateur logique OU non exclusif).

Un premier signal logique SL1 est rendu égal au signal logique SSOL de sollicitation du conducteur.

On détermine, en fonction de l'information IS de sportivité, un temps TMOD de modulation entre les premiers efforts Skyhook et les deuxièmes efforts Roadhook :

- si IS = 1 alors le temps TMOD de modulation est égal à TMOD = TPER . MODSPORT,
- sinon TMOD = TPER,

où TPER est un temps de régime permanent prédéterminé et préenregistré, qui représente le temps de passage de la logique Roadhook vers la logique Skyhook en régime établi, et MODSPORT est un facteur multiplicatif de temps de modulation en cas de choix de conduite sportive, qui est plus grand que 1 et qui est prédéterminé et préenregistré.

A la figure 13, représentant des chronogrammes en fonction du temps t, un coefficient $\alpha_{INTER}$ de pondération intermédiaire est ensuite calculé de la manière suivante :

- initialisation à 0, (stade S10)
- mise à 1 du coefficient $\alpha_{INTER}$ de pondération intermédiaire sur chaque front montant détecté de l'un, plusieurs ou tous les premier, deuxième, troisième, quatrième, cinquième signaux logiques SL1 = SSOL, SL2, SL3, ST4, ST5 (stade S11),
- maintien à 1 du coefficient $\alpha_{INTER}$ de pondération intermédiaire pendant un temps mort TMORT prédéterminé et préenregistré après chacun de ces fronts montants détectés, (stade S12),
- décroissance du coefficient $\alpha_{INTER}$ de pondération intermédiaire, par exemple linéaire, pendant le temps TMOD de modulation après ce temps mort TMORT (stade S13), jusqu'à 0,
- si un nouveau front montant est détecté, le coefficient $\alpha_{INTER}$ de pondération intermédiaire est remis à 1 suivant le stade S11 et le processus S11, S12, S13 décrit ci-dessus est recommencé.

On calcule un signal logique limité $SSOL_{LIMIT}$ de sollicitation du conducteur, en filtrant le signal logique SSOL de sollicitation du conducteur dans un limiteur de pente négative, pour qu'il passe de 1 à 0 au minimum en le temps TMOD de modulation.

Le coefficient $\alpha$ de pondération est égal au coefficient $\alpha_{INTER}$ de pondération intermédiaire, multiplié par le signal logique limité $SSOL_{LIMIT}$ de sollicitation du conducteur :

$$\alpha = \alpha_{INTER} . SSOL_{LIMIT}$$

La figure 14 montre les chronogrammes de l'angle δ du volant au cours d'une mise en virage simple, qui provoque le passage du coefficient α de pondération à 1 (Roadhook) au début et à la fin du virage, alors que le coefficient α de pondération est à 0 (Skyhook) avant le virage, après le virage et au milieu du virage.

Forces de consigne aux roues

On extrait de la table ou courbe préenregistrée donnant le coefficient de répartition d'effort sur l'avant en fonction de la valeur de répartition de masse entre l'avant et l'arrière, la valeur du coefficient CAV de répartition d'effort sur l'avant correspondant à la valeur de répartition de masse RMAvAr entre l'avant et l'arrière, par exemple par interpolation linéaire. Ce coefficient CAV de répartition d'effort sur l'avant est supérieur ou égal à 0 et inférieur ou égal à 1.

Un ratio anti-devers RAD, supérieur ou égal à 0 et inférieur ou égal à 1, est calculé en fonction de la vitesse VVH du véhicule. Par exemple, on extrait de la table ou courbe préenregistrée donnant le ratio anti-devers en fonction de la vitesse du véhicule, la valeur du ratio anti-devers RAD correspondant à la vitesse VVH du véhicule, par exemple par interpolation linéaire.

L'estimateur 22 calcule les forces de consigne des amortisseurs AM aux roues A, B, C, D en fonction des efforts modaux $F_z$, $F_\theta$ et $F_\varphi$ de consigne, selon les formules suivantes :

- la force FA1 de consigne pour la roue avant gauche A :

$$FA1 = \frac{F_z.CAV}{2} - \frac{F_\varphi}{2.e} - \frac{F_\theta.RAD}{v}$$

- la force FB1 de consigne pour la roue avant droite B :

$$FB1 = \frac{F_z.CAV}{2} - \frac{F_\varphi}{2.e} + \frac{F_\theta.RAD}{v}$$

- la force FC1 de consigne pour la roue arrière droite C :

$$FC1 = \frac{F_z.(1-CAV)}{2} + \frac{F_\varphi}{2.e} + \frac{F_\theta.(1-RAD)}{v}$$

- la force FD1 de consigne pour la roue arrière gauche D :

$$FD1 = \frac{F_z.(1-CAV)}{2} + \frac{F_\varphi}{2.e} - \frac{F_\theta.(1-RAD)}{v}$$

L'estimateur détermine ensuite à partir des forces FA1, FB1, FC1, FD1 de consigne des amortisseurs AM aux roues A, B, C, D, et de la vitesse VDEB de débattement valable respectivement pour ces roues A, B, C, D, la loi $ER_C$ =$ER_{CA}$, $ER_{CB}$, $ER_{CC}$, $ER_{CD}$ d'amortissement de consigne que doit prendre l'amortisseur AM de la roue A, B, C, D, par exemple en positionnant le point (VDEB(A) ; FA1) sur le graphique de la figure 15 et en recherchant la loi ER d'amortissement la plus proche.

Etats minimaux

Un estimateur 27 calcule des états minimaux d'amortissement. Cette fonction permet d'interdire à la suspension d'occuper des états d'amortissement trop souples, en imposant des états $ER_M$ minimaux, c'est-à-dire des lois $ER_M$ minimales d'amortissement, et ce, en fonction de 4 flux différents en entrée :

- la vitesse du véhicule pour l'obtention du premier état minimal $ER_{M1}$: ce critère est utilisé pour les situations de vie du véhicule à l'arrêt, ou à vitesse très faible (pour descentes de trottoirs par exemple), ou à vitesse très élevée pour la sécurité et le maintien de caisse.
- l'accélération longitudinale corrigée pour l'obtention du deuxième état minimal $ER_{M2}$: ce critère est utilisé pour la sécurité sur sollicitations longitudinales très importantes, au cas où la logique RoadHook ne donnerait pas satisfaction, et pour les situations d'accélérations ou de freinages stabilisés, par opposition aux phases longitudinales transitoires.

- l'accélération transversale corrigée pour l'obtention du troisième état minimal $ER_{M3}$: ce critère est utilisé pour la sécurité sur sollicitations latérales très importantes, au cas où la logique RoadHook ne donnerait pas satisfaction, et pour les situations de virages stabilisés, pendant lesquels la logique de synthèse privilégie la logique SkyHook.
- le jerk transversal anticipé pour l'obtention du quatrième état minimal $ER_{M4}$: ce critère travaille en parallèle avec la logique RoadHook avec termes anticipatifs. Il permet d'assurer une faible prise d'angle en pilotant l'actionneur par anticipation, et également, selon le paramétrage, d'utiliser des états minimaux typés en sur-vireur ou sous-vireur afin de jouer sur la vivacité du véhicule lors de la mise en virage.

Ces états minimaux sont par exemple calculés séparément pour chaque roue.

Le premier état minimal $ER_{M1}$ est obtenu en extrayant de la table ou courbe préenregistrée donnant le deuxième état minimal en fonction de la vitesse du véhicule, la valeur du premier état minimal $ER_{M1}$ correspondant à la vitesse VVH mesurée du véhicule, par exemple par interpolation linéaire. Le premier état minimal peut être calculé séparément pour les roues avant et pour les roues arrière.

Le deuxième état minimal $ER_{M2}$ est obtenu en extrayant de la table ou courbe préenregistrée donnant le deuxième état minimal en fonction de la vitesse du véhicule et de l'accélération longitudinale corrigée, la valeur du deuxième état minimal $ER_{M2}$ correspondant à la vitesse VVH mesurée du véhicule et à l'accélération longitudinale corrigée $\ddot{X}_{COR}$, par exemple par interpolation linéaire.

Le troisième état minimal $ER_{M3}$ est obtenu en extrayant de la table ou courbe préenregistrée donnant le troisième état minimal en fonction de la vitesse du véhicule et de l'accélération transversale corrigée, la valeur du troisième état minimal $ER_{M3}$ correspondant à la vitesse VVH mesurée du véhicule et à l'accélération transversale corrigée $\ddot{Y}_{COR}$, par exemple par interpolation linéaire.

Le quatrième état minimal $ER_{M4}$ est obtenu en extrayant de la table ou courbe préenregistrée donnant le quatrième état minimal en fonction du jerk transversal anticipé, la valeur du quatrième état minimal $ER_{M4}$ correspondant au jerk transversal anticipé $Y\dddot{}$, par exemple par interpolation linéaire.

Pour chaque roue, l'état minimum $ER_M$ global d'amortissement fourni par l'estimateur 27 est alors égal au maximum des états minimaux $ER_{M1}$, $ER_{M2}$, $ER_{M3}$, $ER_{M4}$. On obtient ainsi un état minimum global $ER_{MA}$, $ER_{MB}$, $ER_{MC}$, $ER_{MD}$ d'amortissement respectivement pour les roues A, B, C, D.

Chacune des deux fonctions RoadHook et SkyHook a comme flux principal en entrée l'information des quatre capteurs de débattement.

Par exemple, pour un véhicule roulant à moins de 20 km/h sans sollicitation conducteur, la fonction SkyHook demandera un amortissement le plus souple possible car les vitesses modales absolues seront très faibles. Cependant, dans cette situation de vie, le véhicule risque de réaliser des montées ou des descentes de trottoirs, qui sont des sollicitations contraignantes, pour lesquelles il serait préférable que le véhicule se trouve dans un état d'amortissement un peu plus ferme.

De même, pour une vitesse du véhicule très élevée (sur autoroute par exemple), sans sollicitations conducteur et sur bonne route, le SkyHook demandera un état souple. Cela peut poser problème pour des grandes vitesses, car l'amortissement risque de devoir passer en très ferme en très peu de temps, ce qui n'est pas possible avec les actionneurs utilisés.

D'autre part, la logique RoadHook peut se trouver légèrement en retard par rapport aux sollicitations conducteurs : les efforts anticipatifs estimés par la logique RoadHook ne sont pas en retard, mais pour qu'un passage en loi ferme soit appliqué, il faut que la roue ait déjà pris de la vitesse de débattement. Or, lorsque la roue prend de la vitesse de débattement, il est déjà trop tard. Il faut donc assurer un amortissement suffisamment ferme, indépendamment de la vitesse de débattement des roues, en intégrant des états d'amortissement minimaux sur accélérations longitudinales et latérales, ainsi que sur jerk latéral (en avance par rapport aux accélérations).

Pour améliorer le confort du véhicule, il est préférable de repasser en logique SkyHook dans les situations de vie virages stabilisés, ou accélérations longitudinales stabilisées. Cela permet de calmer les vitesses absolues de caisse. Cependant, on doit veiller dans ces situations de vie à ne pas trop sous amortir le véhicule car ces situations sont potentiellement dangereuses (virage qui se resserre, dégradation de la chaussée au cours du virage, etc...). On appliquera donc des états minimaux sur les accélérations stabilisées pour permettre d'utiliser la fonction SkyHook de manière sécurisée.

Enfin, les états minimaux sur jerk permettent d'ajouter à la synthèse une marge de manoeuvre sur la vivacité et l'agrément de conduite lors des mises en virage.

Commande de la loi d'amortissement

Un module 28 de commande reçoit en entrée la loi $ER_{CA}$, $ER_{CB}$, ERcc, $ER_{CD}$ d'amortissement de consigne, fournie par l'estimateur 22 et l'état minimum global $ER_{MA}$, $ER_{MB}$, $ER_{MC}$, $ER_{MD}$ d'amortissement, fourni par l'estimateur 27, respectivement pour les roues A, B, C, D et calcule à partir de ces états les états $ER_A$, $ER_B$, $ER_C$, $ER_D$ de commande des amortisseurs des roues A, B, C, D, en prenant pour chaque roue le maximum de la loi d'amortissement de consigne et de l'état minimum global d'amortissement :

$$ER_A = max\ (ER_{CA},\ ER_{MA})$$

$$ER_B = max\ (ER_{CB},\ ER_{MB})$$

$$ER_C = max\ (ER_{CC},\ ER_{MC})$$

$$ER_D = max\ (ER_{CD},\ ER_{MD})$$

Ces états $ER_A$, $ER_B$, $ER_C$, $ER_D$ de commande déterminent la loi d'amortissement prise par chaque amortisseur AM et sont les grandeurs ER de commande envoyées sur l'entrée COM de commande vers l'actionneur de chaque amortisseur AM pour chaque roue A, B, C, D.

Les états $ER_A$, $ER_B$, $ER_C$, $ER_D$ de commande sont en outre envoyés à l'entrée de l'estimateur 12 pour l'état réel ER de l'actionneur.

Ci-dessous sont décrites des fonctions supplémentaires, pouvant être prévues dans le dispositif pour calculer les états $ER_A$, $ER_B$, $ER_C$, $ER_D$ de commande des amortisseurs des roues A, B, C, D.

Prise en compte des percussions

Une détection des percussions s'effectue sur les roues avant. Il n'est pas possible d'anticiper l'obstacle. On détectera donc un obstacle lorsque les roues avant le franchiront. La détection d'une percussion s'effectue en surveillant la vitesse de débattement des roues avant du véhicule.

La particularité d'une percussion est l'importante vitesse de débattement qu'elle génère au niveau des roues. L'obstacle peut être de faible amplitude (nid de poule peu profond par exemple) mais il est génère un choc, car les roues débattent à grande vitesse.

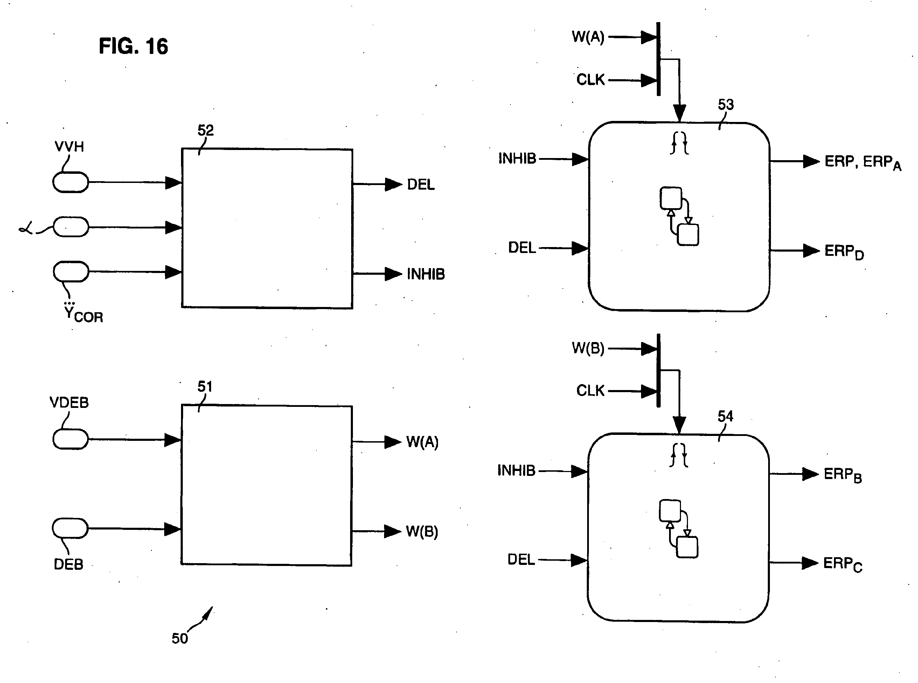

A la figure 16, un estimateur 50 est prévu pour calculer un état de consigne ou loi d'amortissement de consigne ERP en cas de détection d'une percussion. Cet estimateur 50 reçoit en entrée :

- les débattements DEB(A), DEB(B) des roues avant A, B, fournis par les capteurs CAP-DEB de débattements,
- les vitesses de débattement VDEB(A), VDEB(B) des roues avant A, B,
- la vitesse VVH mesurée du véhicule,
- l'accélération transversale corrigée $\dot{Y}_{COR}$,
- le coefficient $\alpha$ de pondération des premiers efforts $F_{z1}$, $F_{\theta1}$ et $F_{\varphi1}$ de confort et des deuxièmes efforts $F_{z2}$, $c_{\theta2}$ et $c_{\varphi2}$ de comportement.

La détection et le traitement des percussions s'effectuent indépendamment sur les roues gauche ou droite du véhicule. Si une percussion n'est détectée que sur la roue avant droit, alors le traitement des percussions ne sera activé que sur les roues du côté droit. Si une percussion n'est détectée que sur la roue avant gauche, alors le traitement des percussions ne sera activé que sur les roues du côté gauche.

L'estimateur 50 comporte :

- un module 51 de détection des percussions en fonction des débattements DEB et des vitesses VDEB de débattement,
- un module 52 de calcul d'un retard d'activation et d'un signal d'inhibition de traitement en fonction de la vitesse VVH du véhicule, de l'accélération transversale corrigée $\dot{Y}\dot{Y}_{COR}$ et du coefficient $\alpha$ de pondération.
- un module 53 de traitement des percussions du côté gauche,
- un module 54 de traitement des percussions du côté droit.

Détection des percussions

Un seuil SDP de détection de percussion est prédéfini dans le module 51. Lorsque, d'un côté du véhicule, par exemple dans ce qui suit le côté gauche, la vitesse de débattement VDEB(A) de la roue avant est supérieure en valeur absolue au seuil SDP de détection de percussion, un signal logique booléen P de détection probable de percussion est mis à 1, alors que si la vitesse de débattement VDEB(A) de la roue avant est inférieure ou égale en valeur absolue au seuil SDP de détection de percussion, le signal P de détection probable de percussion est à 0.

Afin d'optimiser le réglage, ce seuil SDP de détection de percussion est paramétré en fonction de la vitesse VVH du véhicule. On extrait de la table, courbe ou cartographie préenregistrée donnant le seuil de détection de percussion en fonction de la vitesse du véhicule, la valeur du seuil SDP de détection de percussion correspondant à la vitesse VVH du véhicule, par exemple par interpolation linéaire. A vitesses VVH très élevées par exemple, n'importe quel obstacle risque de générer une vitesse de débattement importante. A vitesses de véhicule élevées, il est donc nécessaire d'augmenter le seuil SDP de détection des percussions, afin de ne pas faire de traitement intempestif sur des sollicitations route ne correspondant pas à des percussions proprement dites.

Les vitesses de débattement, après un choc, peuvent osciller pendant quelques instants et risquent de dépasser plusieurs fois le seuil SDP à cause d'un seul choc de départ. Une temporisation TEMP déclenchée au premier dépassement du seuil SDP permet alors d'éviter de détecter plusieurs percussions pour un même franchissement d'obstacle.

Par exemple, une percussion détectée n'est validée que si elle est détectée pendant plus d'une durée prescrite DDP de détection de percussion, par exemple de 15 millisecondes.

Inhibition de la détection de percussion

Un signal S = SIDP d'inhibition de détection de percussion est généré comme étant égal à 1 pour inhiber la détection de percussion, lorsque au moins l'un des débattements avant DEB(A), DEB(B) devient inférieur à un premier seuil SDEB1 de butée, ou supérieur à un deuxième seuil SDEB2 de butée, et est égal à 0 sinon.

En effet, lors de forts mouvements de caisse, le débattement peut être tel que le train ira au contact de ses butées. L'écrasement des butées génère une vitesse de débattement importante, susceptible d'activer la fonction de traitement des percussions. Si cette fonction est activée dans cette situation de vie, elle imposera des états d'amortissement souple à l'arrière pendant un certain temps. Le problème est que si l'état d'amortissement passe en souple lorsque le train est en contact avec ses butées, les mouvements de caisse ne seront pas du tout freinés, des phénomènes de pompage excessif de l'essieu arrière apparaîtront. On inhibera donc la détection des percussions dans cette situation de vie. Pour cela, on surveille la valeur des débattements de roue. Lorsque ces débattements dépassent le seuil paramétrable SDEB1 ou SDEB2 (qui correspond à la course de débattement possible de la roue, préalablement au contact avec les butées d'attaque ou de détente), la détection des percussions est inhibée.

Le module 51 génère un signal W de validation de percussion à partir du signal P de détection probable de percussion, de la manière suivante.

Un signal Q de percussion validable et le signal W de validation de percussion sont générés au cycle n de calcul en fonction de leurs valeurs au cycle n-1 précédent et d'un signal T de temporisation TEMP écoulée, calculé en fonction du signal P de détection probable de percussion.

Le signal Q de percussion validable est initialisé à 1.

Un signal T de temporisation TEMP écoulée est mis à 1, si le signal P de détection probable de percussion est resté à 0 depuis son dernier front descendant pendant un temps supérieur à la temporisation TEMP. Le signal T de temporisation TEMP écoulée est sinon à 0.

Le signal Q de percussion validable est égal à :

$$Q' = \overline{Q}.\overline{W}.T + \overline{Q}.W.T + Q.\overline{W}.\overline{T} + Q.\overline{W}.T$$

où Q' désigne l'état au cycle suivant, et désigne le complément.

Le signal W de validation de percussion est alors mis à 1, signifiant qu'une percussion est bien détectée, lorsque à la fois

- le signal P de détection probable de percussion est à 1 pendant un nombre prescrit de cycles consécutifs, par exemple 3 cycles formant la durée DDP,
- le signal Q de percussion validable est à 1,
- le signal S = SIDP d'inhibition de détection de percussion est à 0, indiquent une non inhibition,
- l'accélération transversale corrigée $\acute{Y}_{COR}$ est inférieure en valeur absolue à un seuil prescrit SY d'inhibition de l'accélération transversale corrigée : $|\ddot{Y}_{COR}| < SY$,
soit

$$W = P \, . \, Q \, . \, \overline{S} \, . \, (|\ddot{Y}_{COR}| < SY)$$

<u>Retard de franchissement et inhibition pour les vitesses faibles</u>

Afin d'améliorer le passage de la percussion sur les roues arrière, il est impératif que celles-ci franchissent l'obstacle avec un état d'amortissement souple. Pour cela, la fonction de traitement des percussions doit estimer l'instant précis du franchissement des roues arrière.

Lorsque la percussion est détectée sur les roues avant, c'est-à-dire lorsque le signal W de validation de percussion est mis à 1, le module 52 calcule le retard DEL de franchissement des roues arrière par rapport aux roues avant d'une manière générale de la manière suivante :

$$DEL = ( \, e \, / \, VVH \, ) - TR$$

où TR est un temps prescrit de réaction correspond au temps nécessaire aux actionneurs pour passer en état souple.

Si la vitesse VVH du véhicule est trop faible (inférieure ou égale à un seuil SWH de vitesse du véhicule) ou si le coefficient $\alpha$ de pondération des premiers efforts $F_{z1}$, $F_{\theta1}$ et $F_{\varphi1}$ de confort et des deuxièmes efforts $F_{z2}$, $c_{\theta2}$ et $c_{\varphi2}$ de comportement est trop grand (supérieur ou égal à un seuil SCOEFF de coefficient de pondération), un signal d'inhibition SINV pour les vitesses faibles est mis à 1, et le retard DEL de franchissement est égal à une valeur prescrite maximum DELMAX.

<u>Traitement des roues arrière</u>

Dès que la percussion est détectée sur la roue avant gauche, une temporisation est lancée pendant le retard DEL de franchissement dans le module 53 de traitement des roues gauche. A la fin de cette temporisation, un état ERP d'amortissement de consigne souple et prescrit est imposé pour la roue arrière gauche du véhicule pendant une durée de traitement prescrite, pour que la percussion soit convenablement amortie par l'amortisseur de la roue arrière gauche. L'état d'amortissement à appliquer et la durée du traitement sont des données de mise au point paramétrables.

<u>Traitement des roues avant</u>

Dès que la percussion est détectée sur la roue avant gauche, le traitement sur la roue avant gauche ne peut être qu'un post-traitement. Celui-ci a pour objectif de limiter les ébranlements de train et de freiner les mouvements et rebonds de roue juste après l'obstacle.

Le post-traitement des roues avant consiste à imposer un état ERP d'amortissement de consigne ferme et prescrit pendant une durée de traitement prescrite. L'état d'amortissement à appliquer et la durée du traitement sont des données de mise au point paramétrables.

<u>Post-traitement des roues avant et arrière</u>

A la fin du traitement des roues arrière, on effectue alors un post-traitement de la percussion, sur les roues avant et sur les roues arrière. Pour freiner les mouvements de la roue dus au passage de l'obstacle, on impose un état ERP d'amortissement de consigne ferme et prescrit pour les roues arrière pendant une durée de post-traitement prescrite. L'état d'amortissement à appliquer et la durée du post-traitement des roues avant et arrière sont des données de mise au point paramétrables.

<u>Inhibition du traitement</u>

Les modules 53, 54 de traitement des percussions produisent des états imposés ERP d'amortissement des percussions, qui peuvent être prépondérants par rapport aux états ER d'amortissement demandés par les fonctions SkyHook et RoadHook.

Dans certaines situations de vie, ces états imposés ERP d'amortissement des percussions peuvent soit dégrader le confort du véhicule, soit s'avérer dangereux pour sa sécurité. C'est pourquoi le traitement des percussions est soumis à d'éventuelles inhibitions.

Lorsque le véhicule se déplace sur une route très dégradée, avec des sollicitations à haute fréquence (type route pavée), les vitesses de débattement des roues atteindront des niveaux élevés, susceptibles d'activer la fonction de traitement des percussions.

Si cette fonction est activée, elle imposera des états ERP de consigne d'amortissement des percussions, qui seront fermes pendant un temps déterminé sur les quatre roues. Sur une route pavée, ces états ERP d'amortissement fermes génèreront de l'inconfort pendant tout le post-traitement. La stratégie idéale sur des pavés ne générant pas de mouvements de caisse est en effet de rester en loi la plus souple possible.

On inhibera donc le traitement des percussions dès qu'un nombre déterminé, par exemple trois, percussions seront détectées en un court laps de temps déterminé, par exemple sur le signal W de validation de percussion. L'inhibition résultante aura une durée paramétrable.

Un autre cas possible d'inhibition du traitement est les vitesses VVH trop faibles du véhicule. D'autre part, lorsque la logique de synthèse de l'AMVAR se trouve en mode « comportement », c'est-à-dire lorsque la logique Road-Hook est activée et que le coefficient $\alpha$ de pondération est égal à 1 ou est proche de 1, on inhibe également le traitement des percussions (voir supra SINV).

Un autre cas d'inhibition du traitement peut être prévu pour la sécurité du véhicule. Lors des fortes sollicitations de la part conducteur, ou lorsque le véhicule est installé en virage stabilisé, imposer un état d'amortissement souple peut s'avérer dangereux pour la tenue de route. Dans ces conditions de roulage, la logique RoadHook optimisant le comportement du véhicule ne doit surtout pas être désactivée par d'autres fonctions. Cela relève de la sécurité des personnes. On surveille donc d'une part l'accélération latérale du véhicule : lorsque celle-ci dépasse un certain seuil paramétrable, on inhibe le traitement des percussions, ainsi que cela est prévu ci-dessus, lorsque l'accélération transversale corrigée $\ddot{Y}_{COR}$ est supérieure ou égale en valeur absolue au seuil prescrit SY d'inhibition de l'accélération transversale corrigée : $|\ddot{Y}_{COR}| \geq SY$.

Le module 52 génère un signal INHIB d'inhibition de traitement des percussions, égal à 1 pour inhiber le traitement des percussions par les modules 53 et 54, lorsque au moins l'une et/ou l'autre des conditions suivantes est réalisée :

- un nombre prédéterminé de percussions, représentées par des front montant du signal W de validation de percussion est détecté en une durée prédéterminée ;
- le signal d'inhibition SINV pour les vitesses faibles est mis à 1, pour indiquer que la vitesse VVH du véhicule est trop faible ou que le coefficient $\alpha$ de pondération des premiers efforts $F_{z1}$, $F_{\theta1}$ et $F_{\varphi1}$ de confort et des deuxièmes efforts $F_{z2}$, $c_{\theta2}$ et $c_{\varphi2}$ de comportement est trop grand, pour indiquer que la logique Roadhook est en vigueur,

$$- \quad \left| \ddot{Y}_{COR} \right| \geq SY \; .$$

Le retard DEL de franchissement et le signal INHIB d'inhibition de traitement des percussions sont envoyées à deux entrées de chacun des modules 53, 54 de traitement. Chacun des modules 53, 54 comporte également une entrée CLK d'horloge, combinée par un opérateur logique ET avec respectivement l'entrée W(A) du signal W de validation de percussion de la roue A avant gauche et l'entrée W(B) du signal W de validation de percussion de la roue B avant droite, pour indiquer la fréquence de calcul des modules 53 et 54. Une entrée d'horloge est également prévue pour chacun des blocs, estimateurs et modules représentés aux figures.

Dans le cas où l'estimateur 50 est prévu, celui-ci fournit les états de consigne ERP en cas de détection d'une percussion, c'est-à-dire pour les roues A, B, C, D, les états de consigne $ERP_A$, $ERP_B$, $ERP_C$, $ERP_D$, à une autre entrée du module 28 de commande.

Le module 28 de commande calcule à partir de ces états les états $ER_A$, $ER_B$, $ER_C$, $ER_D$ de commande des amortisseurs des roues A, B, C, D, en prenant pour chaque roue le maximum des états $ER_C$, ERP d'amortissement de consigne et de l'état minimum global ERM d'amortissement :

$$ER_A = \max(ER_{CA}, ERP_A, ER_{MA})$$

$$ER_B = \max(ER_{CB}, ERP_B, ER_{MB})$$

$$ER_C = \max (ER_{CC}, ERP_C, ER_{MC})$$

$$ER_D = \max (ER_{CD}, ERP_D, ER_{MD})$$

Prise en compte des grandes amplitudes de mouvement (logique des grands débattements)

Une détection des grands débattements et des grandes vitesses de débattement des roues avant ou des roues arrière est prévue. L'objectif est de détecter au plus tôt les obstacles qui peuvent générer des grandes amplitudes de mouvement de caisse, en marche avant et/ou en marche arrière. La détection de ces situations de vie est prévue pour traiter les obstacles sollicitant simultanément les roues droite et gauche du train avant ou arrière. Ces obstacles peuvent être détectés en compression pour les dos d'âne ou en détente pour les saignées ou creux de taille importante. En marche avant, ce genre d'obstacles va générer sur les roues avant de fortes amplitudes de débattements et de vitesses de débattement.

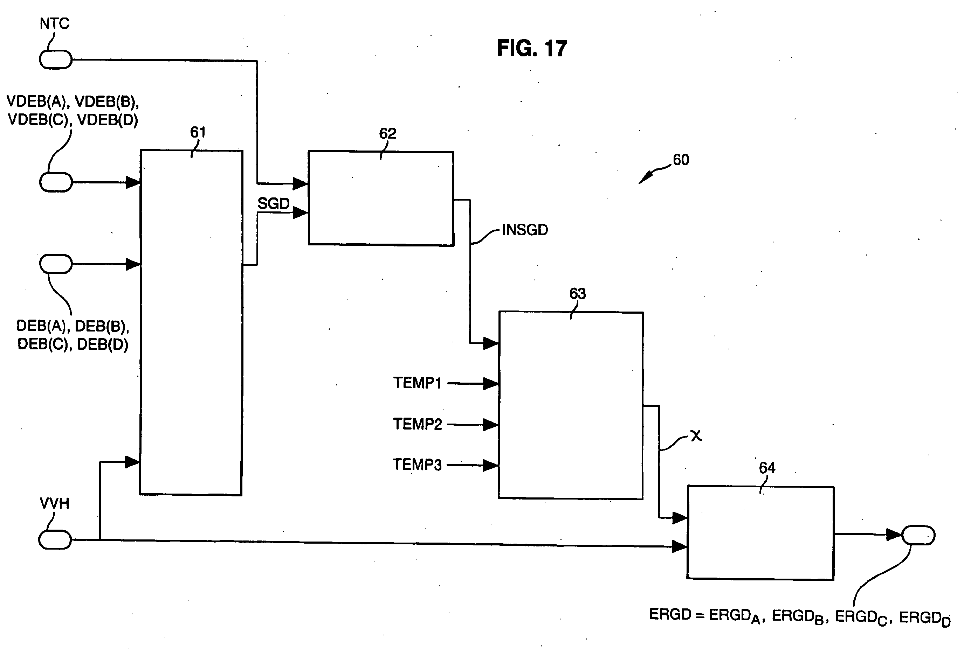

A la figure 17, un estimateur 60 est prévu pour calculer un état de consigne ou loi d'amortissement de consigne ERGD en cas de détection d'une grande amplitude de mouvement de roue. Cet estimateur 60 reçoit en entrée :

- les débattements avant DEB(A), DEB(B) des roues avant A, B, et les débattements DEB(C), DEB(D) des roues arrière C, D, qui sont par exemple ceux filtrés DEBF(A), DEBF(B), DEBF(C), DEBF(D), fournis par le filtre 13 à partir des débattements DEB(A), DEB(B), DEB(C), DEB(D) fournis par les capteurs CAP-DEB de débattements,
- les vitesses de débattement avant VDEB(A), VDEB(B) des roues avant A, B, et les vitesses de débattement DEB (C), DEB(D) des roues arrière C, D, fournies par le module dérivateur DER,
- la vitesse VVH mesurée du véhicule,
- le niveau NTC de tressautement de la caisse, fourni par l'estimateur 24.

L'estimateur 60 met en oeuvre une logique de détection et de traitement des grandes amplitudes de mouvement et comporte :

- un module 61 de détection des grandes amplitudes de mouvement de roue,
- un module 62 de validation et d'inhibition de la détection des grandes amplitudes de mouvement de roue,
- un module 63 de calcul d'un coefficient $\chi$ de traitement des grandes amplitudes de mouvement de roue,
- un module 64 de calcul de l'état de consigne ou loi d'amortissement de consigne ERGD pour les grandes amplitudes de mouvement de roue.

Détection des grandes amplitudes de mouvement de roue

Un premier seuil SDGD de détection de grands débattements et un deuxième seuil SVGD de détection de grandes vitesses de débattement sont prédéfinis dans le module 61.

Lorsqu'à la fois le débattement DEBF(A) de la roue avant gauche dépasse le premier seuil SDGD de détection de grands débattements, le débattement DEBF(B) de la roue avant droite dépasse le premier seuil SDGD de détection de grands débattements, la vitesse de débattement VDEB(A) de la roue avant gauche dépasse le deuxième seuil SVGD de détection de grandes vitesses de débattement et la vitesse de débattement VDEB(B) de la roue avant droite dépasse le deuxième seuil SVGD de détection de grandes vitesses de débattement, alors un premier signal SDGDAV de détection de grands mouvements avant est mis à 1 pour indiquer la détection d'une grande amplitude de mouvement de roue sur les roues avant.

Il en est de même pour un deuxième signal SDGDAR de détection de grands mouvements arrière, qui est mis à 1 pour indiquer la détection d'une grande amplitude de mouvement de roue sur les roues arrière, lorsque les quatre conditions de dépassement à la fois sont remplies avec les débattements DEBF(D) et DEBF(C) et les vitesses de débattement VDEB(D) et VDEB(C) pour les roues arrière.

Les premier et deuxièmes seuils SDGD et SVGD peuvent être différents pour l'avant et l'arrière. Le dépassement des premier et/ou deuxièmes seuils SDGD, SVGD peut être le passage du débattement et/ou de la vitesse de débattement sous le seuil SDGD, SVGD inférieur, par exemple en détente des amortisseurs, et/ou le passage du débattement et/ou de la vitesse de débattement au-dessus d'un autre seuil SDGD supérieur au seuil SDGD, SVGD inférieur, par exemple en attaque des amortisseurs.

Un signal SGD de détection de grands mouvements est mis à 1 pour indiquer la détection d'une grande amplitude de mouvement de roue sur les roues, lorsque le premier signal SDGDAV de détection de grands mouvements avant et/ou le deuxième signal SDGDAR de détection de grands mouvements arrière détecte à 1. Le signal SGD de détection de grands mouvements est fourni par le module 61 de détection au module 62 de validation et d'inhibition.

Pour plus de précision et pour éviter des traitements intempestifs, le premier seuil SDGD de détection de grands débattements et le deuxième seuil SVGD de détection de grandes vitesses de débattement sont paramétrés en fonction de la vitesse VVH du véhicule. Par exemple, pour chacun de ces seuils SDGD, SVGD, on extrait de la table, courbe ou cartographie préenregistrée donnant le seuil de détection en fonction de la vitesse du véhicule, la valeur du seuil SDGD, SVGD de détection correspondant à la vitesse VVH du véhicule, par exemple par interpolation linéaire.

Inhibition de la détection des grands mouvements de roue

Un signal INSGD de validation ou d'inhibition de détection de grande amplitude de mouvement de roues est généré par le module 62, comme étant égal à 0 pour inhiber la détection, lorsque l'une ou plusieurs des conditions suivantes sont réalisées :

- le coefficient $\alpha$ de pondération des premiers efforts $F_{z1}$, $F_{\theta 1}$ et $F_{\varphi 1}$ de confort et des deuxièmes efforts $F_{z2}$, $c_{\theta 2}$ et $c_{\varphi 2}$ de comportement est trop grand, (supérieur à un seuil SCOEFF2 de coefficient de pondération, par exemple nul) pour indiquer que la logique Roadhook est au moins partiellement en vigueur,
- le niveau NTC de tressautement est supérieur à un seuil SNTC prescrit de niveau de tressautement.

Si aucune des conditions d'inhibition n'est réalisée et si le signal SGD de détection de grands mouvements est 1 pour indiquer la détection d'une grande amplitude de mouvement des roues, le signal INSGD prend l'état 1 de validation de la détection de grande amplitude de mouvement de roues.

Dans le premier cas d'inhibition (coefficient $\alpha$ de pondération), sous sollicitations du conducteur, il est plus sûr de laisser la logique Roadhook agir et réagir aux sollicitations routières pour améliorer la tenue de caisse et notamment pour maximiser le contact de la roue avec le sol. Si la logique Roadhook veut transmettre une consigne de passage en états d'amortissement souple, il ne faut pas l'en empêcher. C'est pourquoi on inhibe la détection et le traitement des grandes amplitudes de mouvement lorsque la logique Roadhook est active.

Dans le deuxième cas d'inhibition (niveau NTC de tressautement), le traitement des grandes amplitudes de mouvement peut être pénalisant pour le confort vibratoire, car un état d'amortissement trop ferme transférera dans la caisse les irrégularités de la route, et ne filtrera pas donc pas les tressautements et les trépidations engendrées par cette route. C'est pourquoi il est préférable d'inhiber la logique de traitement des grandes amplitudes de mouvement, lorsque la route est dégradée. On utilise une logique de reconnaissance de l'état de la route, basée sur des filtrages passe-bande des débattements DEB. Ainsi que cela est indiqué ci-dessus pour le calcul du niveau NMC de basses fréquences et du niveau NTC de tressautement, un filtrage autour du mode de caisse (autour du Hertz) et un filtrage dans la bande des tressautements (entre 3 et 8 Hz) sont utilisés pour caractériser l'état de la route (bonne route, route à bon revêtement mais générant des mouvements de caisse, route à revêtement dégradé mais plate, route à revêtement dégradé mais générant des mouvements de caisse). Pour l'inhibition, on utilise le niveau de tressautement calculé à partir du filtrage entre 3 et 8 Hz. Le seuil SNTC prescrit de niveau de tressautement est paramétrable. Ainsi, le compromis entre tenue de caisse et confort vibratoire est optimisé.

Traitement des grands mouvements de roues

L'estimateur 63 calcule, à partir du signal INSGD de validation ou d'inhibition de détection de grande amplitude de mouvement de roues, le coefficient $\chi$ de traitement des grandes amplitudes de mouvement de roue.

Le coefficient $\chi$ de traitement est une variable supérieure ou égale à 0 et inférieure ou égale à 1. Par défaut, le coefficient $\chi$ de traitement est à 0. Lorsque le signal INSGD passe de l'état 0 d'inhibition de détection de grande amplitude de mouvement de roues à l'état 1 de validation de grande amplitude de mouvement de roues, le coefficient $\chi$ de traitement augmente de 0 à 1 avec une pente de montée prescrite, par exemple paramétrable par une première temporisation TEMP1 en entrée du module 63. Le coefficient $\chi$ de traitement est ensuite maintenu à sa valeur maximum 1 pendant une durée prescrite, par exemple paramétrable par une deuxième temporisation TEMP2 en entrée du module 63, et redescend à 0 avec une pente de descente prescrite, par exemple paramétrable par une troisième temporisation TEMP3 en entrée du module 63.

Etats minimaux en cas de détection des grands mouvements de roues

Le module 64 reçoit le coefficient $\chi$ de traitement des grandes amplitudes de mouvement de roue et la vitesse VVH du véhicule et calcule en fonction de ceux-ci la loi d'amortissement de consigne ERGD en cas de détection d'une grande amplitude de mouvement de roue.

Le traitement des situations de grande amplitude de mouvement de roues est effectué à l'aide d'états ERGD d'amortissement de consigne minimaux.

Les différents paramètres intervenant dans le calcul du coefficient $\chi$ de traitement permettent de maîtriser exactement l'instant et le temps pendant lequel les états ERGD d'amortissement minimaux seront appliqués par le module 64.

Ces états minimaux ERGD sont paramétrables en fonction de la vitesse VVH du véhicule pour optimiser le compromis entre tenue de caisse et confort vibratoire quelle que soit la vitesse du véhicule : les états minimaux à utiliser sont par exemple moins élevés à 30 km/h pour le passage des dos d'âne qu'à vitesse plus élevée où une sollicitation de la route créant un grand débattement va nécessiter des états minimaux élevés. Les états minimaux ERGD peuvent également être calculés séparément pour les roues avant et pour les roues arrière.

Le calcul des états ERGD d'amortissement de consigne est par exemple effectué de la manière suivante :

- un état intermédiaire ERGD-INTER de grande amplitude de mouvement de roues (numéro de loi d'amortissement intermédiaire) est extrait d'une table ou courbe préenregistrée donnant cet état intermédiaire état intermédiaire en fonction de la vitesse du véhicule, la valeur ERGD-INTER de l'état intermédiaire de grande amplitude de mouvement de roues, correspondant à la vitesse VVH du véhicule, par exemple par interpolation linéaire.

- l'état ERGD d'amortissement de consigne de grande amplitude de mouvement de roues est alors égal à l'état intermédiaire ERGD-INTER d'amortissement, multiplié par le coefficient $\chi$ de traitement des grandes amplitudes de mouvement de roue, arrondi par exemple au numéro de loi d'amortissement le plus proche.

Dans le cas où l'estimateur 60 est prévu, celui-ci fournit les états d'amortissement de consigne ERGD en cas de détection d'une grande amplitude de mouvement de roue, c'est-à-dire pour les roues A, B, C, D, les états de consigne $ERP_A$, $ERP_B$, $ERP_C$, $ERP_D$, à une autre entrée du module 28 de commande.

Le module 28 de commande calcule à partir de ces états les états $ERGD_A$, $ERGD_B$, $ERGD_C$, $ERGD_D$ de commande des amortisseurs des roues A, B, C, D, en prenant pour chaque roue le maximum des états $ER_C$, ERGD (et éventuellement ERP pour la prise en compte des percussions) d'amortissement de consigne et de l'état minimum global ERM d'amortissement :

$$ER_A = \max (ER_{CA}, ERGD_A, ER_{MA})$$

$$ER_B = \max (ER_{CB}, ERGD_B, ER_{MB})$$

$$ER_C = \max (ER_{CC}, ERGD_C, ER_{MC})$$

$$ER_D = \max (ER_{CD}, ERGD_D, ER_{MD})$$

**Revendications**

1. Dispositif de commande d'une suspension à amortissement variable d'une caisse (2) de véhicule automobile sur ses roues, comportant un calculateur (CSS) apte à calculer une grandeur (ER) de commande d'un actionneur (M) d'au moins un amortisseur (AM) à amortissement variable de la suspension (S) en fonction d'au moins une vitesse modale de caisse calculée à partir d'au moins une accélération modale de caisse déterminée sur le véhicule, **caractérisé en ce qu'**il comprend en outre au moins un capteur (CAP-DEB) de débattement d'une roue (A, B, C, D) par rapport à la caisse (2) du véhicule, connecté à un premier moyen (CAL) de calcul de l'accélération modale de caisse à partir de la mesure (DEB) de débattement fournie par le capteur (CAP-DEB) de débattement.

2. Dispositif de commande suivant la revendication 1, **caractérisé en ce que** le premier moyen (CAL) de calcul de l'accélération modale de caisse comprend un estimateur (12) d'au moins un effort (FA, FB, FC, FD) exercé par la suspension (S) de ladite roue (A, B, C, D) sur la caisse (2) en fonction d'au moins la mesure (DEB) de débattement fournie par le capteur (CAP-DEB) de débattement, et un deuxième moyen (CAL-ACC) de calcul de l'accélération modale de caisse en fonction au moins de l'effort (FA, FB, FC, FD) de suspension fourni par ledit estimateur (12) d'effort de suspension.

**3.** Dispositif de commande suivant la revendication 2, **caractérisé en ce que** l'estimateur (12) d'effort de suspension comprend :

- un module dérivateur (DER) calculant une vitesse (VDEB) de débattement à partir de la mesure (DEB) de débattement fournie par le capteur (CAP-DEB) de débattement,
- un estimateur (MFAM) d'une force (FAM) d'amortissement de l'amortisseur (AM) en fonction de la vitesse (VDEB) de débattement fournie par le module dérivateur (DER) et de la loi actuelle mémorisée d'amortissement (ER) de l'amortisseur (AM),
- un estimateur (MFSEC) d'une force de frottement sec (FSEC) en fonction de la vitesse (VDEB) de débattement,
- un estimateur (AD1, MLR, SOUS) d'une FLB de flexion de ressorts et de butées de suspension de l'amortisseur (AM) en fonction de la valeur (DEBF) de débattement et d'une assiette statique (AS) déterminée de la caisse (2).

**4.** Dispositif de commande suivant la revendication 3, **caractérisé en ce que** l'estimateur (MFSEC) de la force de frottement sec (FSEC) est une fonction tangente hyperbolique (tanh) ou tangente circulaire (tg) de la vitesse (VDEB) de débattement divisée par une valeur fixe, cette fonction étant multipliée par un facteur multiplicatif prescrit (FsAv, FsAr).

**5.** Dispositif de commande suivant la revendication 3 ou 4, **caractérisé en ce que** l'estimateur (AD1, MLR, SOUS) de la force de flexion de ressorts et de butées de suspension comprend :

- un module (MAS) de calcul de l'assiette statique (AS) du véhicule en fonction de la valeur de débattement (DEBF),
- un additionneur (AD1) de calcul d'une valeur somme de la valeur de débattement (DEBF) et de l'assiette statique (AS),
- un module (MLR) de calcul d'une force de flexion de ressorts et de butées de suspension absolue (FLEX-ABS) de l'amortisseur (AM) en fonction de ladite valeur somme,
- un module (MDEA) de calcul d'un effort statique de flexion (DEAR, DEAV) sur ladite roue en fonction de l'assiette statique (AS),
- un soustracteur (SOUS) fournissant ladite force de flexion de ressorts et de butées de suspension par soustraction de l'effort (DEAV, DEAR) statique de flexion à la force de flexion de ressorts et de butées de suspension absolue (FLEX-ABS).

**6.** Dispositif de commande d'une suspension suivant la revendication 5, **caractérisé en ce qu'**il est prévu un capteur (CAP-DEB) de débattement pour chacune des deux roues avant et des deux roues arrière, et le module (MAS) de calcul de l'assiette statique (AS) comporte un moyen (20) de calcul de l'assiette statique avant (ASav) et de l'assiette statique arrière (ASar) du véhicule, comme étant le débattement moyen (DEBAVMOY) des débattements (DEB) des roues avant (A, B), respectivement arrière (C, D), filtré par un filtre passe-bas, débattement moyen filtré auquel est ensuite rajoutée une constante de décalage d'assiette avant, respectivement arrière.

**7.** Dispositif de commande suivant l'une quelconque des revendications précédentes, **caractérisé en ce que** le premier moyen (CAL) de calcul comprend en outre un estimateur (14) d'un couple (Ce) de roulis et/ou un estimateur (15) d'un couple ($C_\varphi$) de tangage.

**8.** Dispositif de commande suivant la revendication 7, **caractérisé en ce que** le premier moyen (CAL) de calcul comporte :

- un moyen de calcul d'une valeur de recalage RECT d'accélération transversale,
- un capteur (CAP-ACCT) d'accélération transversale ACCT de la caisse (2) du véhicule,
- l'estimateur (14) du couple (Ce) de roulis calculant ledit couple ce de roulis selon la formule :

$$c_\theta = (ACCT-RECT).(MTOT).d(G, CR)$$

où MTOT est la masse du véhicule, et
d(G, CR) est la distance prédéterminée entre le centre de gravité (G) de la caisse et le centre (CR) de roulis de celle-ci.

9. Dispositif de commande suivant la revendication 7 ou 8, **caractérisé en ce que** le premier moyen (CAL) de calcul comporte :

- un moyen de calcul d'une valeur de recalage RECL d'accélération longitudinale,
- un capteur (CAPL) d'accélération longitudinale ACCL de la caisse (2) du véhicule,

l'estimateur (15) du couple ($C_\varphi$) de tangage calculant ledit couple $c_\varphi$ de tangage selon la formule :

$$c_\varphi = (ACCL-RECL).(MTOT).hG + c_{\varphi B},$$

où

MTOT est la masse du véhicule,
hG est la hauteur prédéterminée entre le centre de gravité (G) de la caisse et le centre (CT) de tangage de celle-ci, et
$c_{\varphi B}$ est la composante du couple de tangage dû à l'effet Brouilhet.

10. Dispositif de commande suivant la revendication 9, **caractérisé en ce que** la composante $c_{\varphi B}$ du couple de tangage dû à l'effet Brouilhet est calculée en fonction d'une information (IF) de freinage fournie par un module (16) de détermination en fonction d'une valeur de pression de maître cylindre, fournie par un capteur (CAP-P) de pression du maître cylindre.

11. Dispositif de commande suivant l'une quelconque des revendications précédentes, **caractérisé en ce qu'**il comprend un premier filtre (17) éliminant au moins les basses fréquences de l'accélération modale de caisse fournie par le premier moyen (CAL) de calcul et un troisième moyen (18) de calcul de la vitesse modale de caisse à partir de l'accélération modale de caisse filtrée fournie par le premier filtre (17).

12. Dispositif de commande suivant la revendication 11, **caractérisé en ce que** la fréquence de coupure basse du premier filtre (17) est supérieure ou égale à 0,1 Hz.

13. Dispositif de commande suivant l'une quelconque des revendications précédentes, **caractérisé en ce que** le premier moyen (CAL) de calcul de l'accélération modale de caisse comprend un deuxième filtre (13) éliminant au moins les basses fréquences de la mesure (DEB) de débattement fournie par le capteur (CAP-DEB) de débattement.

14. Dispositif de commande suivant la revendication 13, **caractérisé en ce que** la fréquence de coupure basse du deuxième filtre (13) est supérieure ou égale à 0,2 Hz.

15. Dispositif de commande d'une suspension suivant l'une quelconque des revendications précédentes, **caractérisé en ce que** la grandeur (ER) de commande est une loi d'amortissement déterminée parmi une pluralité de lois (ER) d'amortissement différentes imposant la force (FA) de l'amortisseur en fonction de sa vitesse (VDEB) de débattement.

16. Véhicule automobile (1) comportant une caisse (2), des roues (A, B, C, D), une suspension (S) de la caisse (2) sur les roues (A, B, C, D) et un dispositif de commande de la suspension (S) suivant l'une quelconque des revendications précédentes.

17. Procédé d'obtention d'un véhicule automobile,
le véhicule automobile étant muni de roues, d'une caisse, d'une suspension ayant au moins un amortisseur à amortissement variable de la caisse sur les roues, et d'un dispositif de commande de la suspension, le dispositif de commande ayant au moins un calculateur (CSS) apte à calculer une grandeur (ER) de commande d'un actionneur (M) dudit au moins un amortisseur (AM) de la suspension,
le procédé d'obtention comportant une étape de montage du calculateur (CSS) sur le véhicule,
**caractérisé en ce que** le procédé d'obtention comporte
au moins une étape de programmation du calculateur suivant au moins un programme comportant des instructions de programme mettant en oeuvre les moyens de calcul du dispositif de commande de la suspension suivant l'une quelconque des revendication 1 à 15.

18. Programme informatique de pilotage d'un calculateur (CSS), comportant des instructions de programme pour le calcul de l'accélération modale de caisse à partir de la mesure (DEB) de débattement fournie par le capteur (CAP-DEB) de débattement de roue, pour le calcul de la vitesse modale de caisse en fonction d'au moins cette accélération modale de caisse et pour le calcul de la grandeur de commande de l'actionneur (M) en fonction de cette vitesse modale de caisse, lorsqu'il est mis en oeuvre dans un dispositif de commande de suspension selon l'une quelconque des revendications 1 à 15.

**Claims**

1. A suspension control device with variable damping for a motor vehicle body (2) on its wheels, having a computer (CSS) able to calculate a control magnitude (ER) of an actuator (M) of at least one damper (AM) with variable damping of the suspension (S) as a function of at least one body modal speed, calculated from at least one body modal acceleration determined on the vehicle, **characterized in that** it further comprises at least one sensor (CAP-DEB) of the displacement of a wheel (A, B, C, D) with respect to the vehicle body (2), connected to a first means (CAL) for calculating the body modal acceleration from the displacement measurement (DEB) provided by the displacement sensor (CAP-DEB).

2. The control device according to Claim 1, **characterized in that** the first means (CAL) for calculating the body modal acceleration comprises an estimator (12) of at least one force (FA, FB, FC, FD) exerted by the suspension (S) of said wheel (A, B, C, D) on the body (2) as a function of at least the displacement measurement (DEB) provided by the displacement sensor (CAP-DEB), and a second means (CAL-ACC) for calculating the body modal acceleration as a function of at least the suspension force (FA, FB, FC, FD) provided by said suspension force estimator (12).

3. The control device according to Claim 2, **characterized in that** the suspension force estimator (12) comprises:

   - a derivator module (DER) calculating a displacement speed (VDEB) from the displacement measurement (DEB) provided by the displacement sensor (CAP-DEB),
   - an estimator (MFAM) of a damping force (FAM) for the damper (AM) as a function of the displacement speed (VDEB) provided by the derivator module (DER) and the memorized current damping law (ER) of the damper (AM),
   - an estimator (MFSEC) of a dry friction force (FSEC) as a function of the displacement speed (VDEB),
   - an estimator (AD1, MLR, SOUS) of a flexion FLB of suspension springs and stops of the damper (AM) as a function of the displacement value (DEBF) and a determined and a determined static attitude (AS) of the body (2).

4. The control device according to Claim 3, **characterized in that** the estimator (MFSEC) of the dry friction force (FSEC) is a hyperbolic tangent function (tanh) or circular tangent function (tg) of the displacement speed (VDEB) divided by a fixed value, this function being multiplied by a prescribed multiplying factor (FsAv, FsAr).

5. The control device according to Claim 3 or 4, **characterized in that** the estimator (AD1, MLR, SOUS) of the flexion force of suspension springs and stops comprises:

   - a module (MAS) for calculating the static attitude (AS) of the vehicle as a function of the displacement value (DEBF),
   - an adder (AD1) for calculating a summed value of the displacement value (DEBF) and the static attitude (AS),
   - a module (MLR) for calculating an absolute flexion force of suspension springs and stops (FLEX-ABS) of the damper (AM) as a function of said summed value,
   - a module (MDEA) for calculating a static flexion force (DEAR, DEAV) on said wheel as a function of the static attitude (AS),
   - a subtractor (SOUS) providing said flexion force of suspension springs and stops by subtracting the static flexion force (DEAV, DEAR) from the absolute flexion force of suspension springs and stops (FLEX-ABS).

6. The suspension control device according to Claim 5, **characterized in that** a displacement sensor (CAP-DEB) is provided for each of the two front wheels and the two rear wheels, and the module (MAS) for calculating the static attitude (AS) has a means (20) for calculating the front static attitude (ASav) and the rear static attitude (ASar) of the vehicle, as being the mean displacement (DEBAVMOY) of the displacements (DEB) of the front wheels (A, B) and rear wheels (C, D) respectively, filtered by a low-pass filter, a front attitude offset constant and a rear attitude offset constant, respectively, being added to this filtered mean displacement.

7. The control device according to any one of the preceding claims, **characterized in that** the first calculation means (CAL) further comprise an estimator (14) of a roll torque ($C_\theta$) and/or an estimator (15) of a pitch torque ($C_\varphi$).

8. The control device according to Claim 7, **characterized in that** the first calculation means (CAL) has:

   - a means for calculating a transverse acceleration reset value RECT,
   - a sensor (CAP-ACCT) of the transverse acceleration ACCT of the vehicle body (2),
   the estimator (14) of the roll torque ($C_\theta$) calculating said roll torque $c_\theta$ according to the formula:

$$C_\theta = (ACCT-RECT).(MTOT).d(G, CR)$$

   where MTOT is the mass of the vehicle, and
   d(G, CR) is the predetermined distance between the centre of gravity (G) of the body and its roll centre (CR).

9. The control device according to Claim 7 or 8, **characterized in that** the first calculation means (CAL) has:

   - a means for calculating a longitudinal acceleration reset value RECL,
   - a sensor (CAPL) of the longitudinal acceleration ACCL of the vehicle body (2),
   the estimator (15) of the pitch torque ($C_\varphi$) calculating said pitch torque $c_\varphi$ according to the formula:

$$c_\varphi = (ACCL-RECL).(MTOT).hG + c_{\varphi B},$$

   where

      MTOT is the mass of the vehicle,
      hG is the predetermined height between the centre of gravity (G) of the body and its pitch centre (CT), and
      $c_{\varphi B}$ is the component of the pitch torque due to the Brouilhet effect.

10. The control device according to Claim 9, **characterized in that** the component $c_{\varphi B}$ of the pitch torque due to the Brouilhet effect is calculated as a function of a braking information (IF) provided by a determination module (16) as a function of a master cylinder pressure value provided by a pressure sensor (CAP-P) of the master cylinder.

11. The control device according to any one of the preceding claims, **characterized in that** it comprises a first filter (17) eliminating at least the low frequencies of the body modal acceleration provided by the first calculation means (CAL) and a third means (18) for calculating the body modal speed from the filtered body modal acceleration provided by the first filter (17).

12. The control device according to Claim 11, **characterized in that** the low cutoff frequency of the first filter (17) is greater than or equal to 0.1 Hz.

13. The control device according to any one of the preceding claims, **characterized in that** the first means (CAL) for calculating the body modal acceleration comprises a second filter (13) eliminating at least the low frequencies from the displacement measurement (DEB) provided by the displacement sensor (CAP-DEB).

14. The control device according to Claim 13, **characterized in that** the low cutoff frequency of the second filter (13) is greater than or equal to 0.2 Hz.

15. The control device of a suspension according to any one of the preceding claims, **characterized in that** the control magnitude (ER) is a damping law determined from a plurality of different damping laws (ER) that impose the damper force (FA) as a function of its displacement speed (VDEB).

16. A motor vehicle (1) having a body (2), wheels (A, B, C, D), a suspension (S) of the body (2) on the wheels (A, B, C, D) and a suspension control device (S) according to any one of the preceding claims.

17. A production method for a motor vehicle,

the motor vehicle being equipped with wheels, a body, a suspension having at least one damper with variable damping of the body on the wheels, and a suspension control device, the control device having at least one computer (CSS) able to calculate a control magnitude (ER) of an actuator (M) of said at least one suspension damper (AM), the production method having a step in which the computer (CSS) is mounted on the vehicle, **characterized in that** the production method has

at least one computer programming step using at least one program having program instructions that implement the calculating means of the suspension control device according to any one of Claims 1 to 15.

18. A computer program for controlling a computer (CSS), having program instructions for calculating the body modal acceleration from the displacement measurement (DEB) provided by the wheel displacement sensor (CAP-DEB), for calculating the body modal speed as a function of at least this body modal acceleration and for calculating the control magnitude of the actuator (M) as a function of this body modal speed, when it is implemented in a suspension control device according to any one of Claims 1 to 15.

**Patentansprüche**

1. Vorrichtung zum Regeln einer Aufhängung mit variabler Dämpfung einer Kraftfahrzeugkarosserie (2) auf ihren Rädern, die einen Rechner (CSS) aufweist, der geeignet ist, um eine Steuergröße (ER) eines Stellantriebs (M) mindestens eines Dämpfers (AM) mit variablem Dämpfen der Aufhängung (S) in Abhängigkeit von mindestens einer modalen Karosseriegeschwindigkeit, die ausgehend von mindestens einer modalen Karosseriebeschleunigung, berechnet wird, die auf dem Fahrzeug bestimmt wird, zu berechnen, **dadurch gekennzeichnet, dass** sie ferner mindestens einen Ausschlagsensor (CAP-DEB) eines Rads (A, B, C, D) in Bezug zu der Karosserie (2) des Fahrzeugs aufweist, der an ein erstes Mittel (CAL) zur Berechnung der modalen Karosseriebeschleunigung ausgehend von der Ausschlagmessung (DEB), die von dem Ausschlagsensor (CAP-DEB) geliefert wird, angeschlossen ist.

2. Regelvorrichtung nach Anspruch 1, **dadurch gekennzeichnet, dass** das erste Mittel (CAL) zur Berechnung der modalen Karosseriebeschleunigung einen Schätzer (12) mindestens einer Kraft (FA, FB, FC, FC), die von der Aufhängung (S) des Rads (A, B, C, D) auf die Karosserie (2) ausgeübt wird, in Abhängigkeit von mindestens der Ausschlagmessung (DEB), die von dem Ausschlagsensor (CAP-DEB) geliefert wird, aufweist, und ein zweites Mittel (CAL-ACC) zur Berechnung der modalen Karosseriebeschleunigung in Abhängigkeit von mindestens der Aufhängungskraft (FA, FB, FC, FD), die von dem Aufhängungskraftschätzer (12) geliefert wird.

3. Regelvorrichtung nach Anspruch 2, **dadurch gekennzeichnet, dass** der Aufhängungskraftschätzer (12) Folgendes aufweist:

   - ein Differenziermodul (DER), das eine Ausschlaggeschwindigkeit (VDEB) ausgehend von der Ausschlagmessung (DEB), die von dem Ausschlagsensor (CAP-DEB) geliefert wird, berechnet,
   - einen Schätzer (MFAM) einer Dämpfkraft (FAM) des Dämpfers (AM) in Abhängigkeit von der Ausschlaggeschwindigkeit (VDEB), die von dem Differenziermodul (DER) geliefert wird, und dem aktuellen gespeicherten Dämpfungsgesetz (ER) des Dämpfers (AM),
   - einen Schätzer (MFSEC) einer trockenen Reibungskraft (FSEC) in Abhängigkeit von der Ausschlaggeschwindigkeit (VDEB),
   - einen Schätzer (AD1, MLR, SOUS) einer Biegungs-FLB von Federn und Aufhängungsanschlägen des Dämpfers (AM) in Abhängigkeit von dem Ausschlagwert (DEBF) und einer bestimmten statischen Lage (AS) der Karosserie (2).

4. Regelvorrichtung nach Anspruch 3, **dadurch gekennzeichnet, dass** der Schätzer (MFSEC) der trockenen Reibungskraft (FSEC) eine hyperbolische Tangentenfunktion (tanh) oder Kreistangentenfunktion (tg) der Ausschlaggeschwindigkeit (VDEB) geteilt durch einen fixen Wert ist, wobei diese Funktion mit einem vorgeschriebenen Multiplikationsfaktor (FsAv, FsAr) multipliziert wird.

5. Regelvorrichtung nach Anspruch 3 oder 4, **dadurch gekennzeichnet, dass** der Schätzer (AD1, MLR, SOUS) der Biegekraft von Federn und Aufhängungsanschlägen Folgendes aufweist:

   - ein Modul (MAS) zur Berechnung der statischen Lage (AS) des Fahrzeugs in Abhängigkeit von dem Ausschlagwert (DEBF),
   - einen Rechenaddierer (AD1) eines Summenwerts des Ausschlagwerts (DEBF) und der statischen Lage (AS),

- ein Modul (MLR) zur Berechnung einer absoluten Biegekraft von Federn und Aufhängungsanschlägen (FLEX-ABS) des Dämpfers (AM) in Abhängigkeit von dem Summenwert,

- ein Modul (MDEA) zur Berechnung einer statischen Biegekraft (DEAR, DEAV) auf dem Rad in Abhängigkeit von der statischen Lage (AS),

- einen Subtrahierer (SOUS), der die Biegekraft von Federn und Aufhängungsanschlägen durch Subtraktion der statischen Biegekraft (DEAV, DEAR) von der absoluten Biegekraft von Federn und Aufhängungsanschlägen (FLEX-ABS) liefert.

6. Regelvorrichtung einer Aufhängung nach Anspruch 5, **dadurch gekennzeichnet, dass** ein Ausschlagsensor (CAP-DEB) für jedes der zwei Vorderräder und zwei Hinterräder vorgesehen ist, und dass das Modul (MAS) zur Berechnung der statischen Lage (AS) ein Mittel (20) zur Berechnung der vorderen statischen Lage (ASav) und der hinteren statischen Lage (ASar) des Fahrzeugs als den mittleren Ausschlag (DEBAVMOY) der Ausschläge (DEB) jeweils der Vorderräder (A, B), der Hinterräder (C, D) gefiltert durch ein Tiefpassfilter aufweist, gefilterter mittlerer Ausschlag, zu dem anschließend eine Versatzkonstante jeweils für die vordere Lage, hintere Lage hinzugefügt wird.

7. Regelvorrichtung nach einem der vorhergehenden Ansprüche, **dadurch gekennzeichnet, dass** das erste Rechenmittel (CAL) ferner einen Schätzer (14) eines Rollbewegungsmoments ($C_\theta$) und/oder einen Schätzer (15) eines Nickbewegungsmoments ($C_\varphi$) aufweist.

8. Regelvorrichtung nach Anspruch 7, **dadurch gekennzeichnet, dass** das erste Rechenmittel (CAL) Folgendes aufweist:

- ein Mittel zur Berechnung eines Querbeschleunigungs-Nachstellwerts RECT,
- einen Sensor (CAP-ACCT) der Querbeschleunigung ACCT der Karosserie (2) des Fahrzeugs,
wobei der Schätzer (14) des Rollbewegungsmoments ($C_\theta$) das Rollbewegungsmoment $c_\theta$ gemäß der folgenden Formel berechnet:

$$c_\theta = (ACCT-RECT).(MTOT).d(G, CR)$$

wobei MTOT die Masse des Fahrzeugs ist und
d(G, CR) die vorbestimmte Entfernung zwischen dem Schwerpunkt (G) der Karosserie und ihrer Rollbewegungsmitte (CR) ist.

9. Regelvorrichtung nach Anspruch 7 oder 8, **dadurch gekennzeichnet, dass** das erste Rechenmittel (CAL) Folgendes aufweist:

- ein Mittel zur Berechnung eines Längsbeschleunigungsnachstellwerts RECL,
- einen Sensor (CAPL) der Längsbeschleunigung ACCL der Karosserie (2) des Fahrzeugs,
wobei der Schätzer (15) des Nickbewegungsmoments ($C_\varphi$) das Nickbewegungsmoment $c_\varphi$ gemäß der folgenden Formel berechnet:

$$c_\varphi = (ACCL-RECL).(MTOT).hg + c_{\varphi B},$$

wobei

MTOT die Masse des Fahrzeugs ist,
hG die vorbestimmte Höhe zwischen dem Schwerpunkt (G) der Karosserie und ihrer Nickbewegungsmitte (CT) ist, und
$c_{\varphi B}$ die Komponente des Nickbewegungsmoments ist, die auf den Brouilhet-Effekt zurückzuführen ist.

10. Regelvorrichtung nach Anspruch 9, **dadurch gekennzeichnet, dass** die Komponente $c_{\varphi B}$ des Nickbewegungsmoments, die auf den Brouilhet-Effekt zurückzuführen ist, in Abhängigkeit von einer Bremsinformation (IF) berechnet wird, die von einem Modul (16) zum Bestimmen in Abhängigkeit von einem Hauptzylinderdruckwert, der von einem Drucksensor (CAP-P) des Hauptzylinders geliefert wird, geliefert wird.

**11.** Regelvorrichtung nach einem der vorhergehenden Ansprüche, **dadurch gekennzeichnet, dass** sie ein erstes Filter (17) aufweist, das mindestens die niedrigen Frequenzen der modalen Karosseriebeschleunigung eliminiert, die von dem ersten Rechenmittel (CAL) geliefert werden, und ein drittes Mittel (18) zur Berechnung der modalen Karosseriegeschwindigkeit ausgehend von der modalen gefilterten Karosseriebeschleunigung, die von dem ersten Filter (17) geliefert wird.

**12.** Regelvorrichtung nach Anspruch 11, **dadurch gekennzeichnet, dass** die untere Grenzfrequenz des ersten Filters (17) größer oder gleich 0,1 Hz ist.

**13.** Regelvorrichtung nach einem der vorhergehenden Ansprüche, **dadurch gekennzeichnet, dass** das erste Mittel (CAL) zur Berechnung der modalen Karosseriebeschleunigung ein zweites Filter (13) aufweist, das mindestens die niedrigen Frequenzen der Ausschlagmessung (DEB), die von dem Ausschlagsensor (CAP-DEB) geliefert werden, eliminiert.

**14.** Regelvorrichtung nach Anspruch 13, **dadurch gekennzeichnet, dass** die untere Grenzfrequenz des zweiten Filters (13) größer oder gleich 0,2 Hz ist.

**15.** Regelvorrichtung einer Aufhängung nach einem der vorhergehenden Ansprüche, **dadurch gekennzeichnet, dass** die Steuergröße (ER) ein Dämpfungsgesetz ist, das aus einer Vielzahl unterschiedlicher Dämpfungsgesetze (ER) ausgewählt ist, das die Kraft (FA) des Dämpfers in Abhängigkeit von seiner Ausschlaggeschwindigkeit (VDEB) auferlegt.

**16.** Kraftfahrzeug (1), das eine Karosserie (2), Räder (A, B, C, D), eine Aufhängung (S) der Karosserie (2) auf den Rädern (A, B, C, D) und eine Regelvorrichtung der Aufhängung (S) nach einem der vorhergehenden Ansprüche aufweist.

**17.** Verfahren zum Erzielen eines Kraftfahrzeugs,
wobei das Kraftfahrzeug mit Rädern, einer Karosserie, einer Aufhängung, die mindestens einen Dämpfer mit variabler Dämpfung der Karosserie auf den Rädern hat, und einer Regelvorrichtung der Aufhängung versehen ist, wobei die Regelvorrichtung mindestens einen Rechner (CSS) hat, der geeignet ist, um eine Steuergröße (ER) eines Stellantriebs (M) des mindestens einen Dämpfers (AM) der Aufhängung zu berechnen,
wobei das Verfahren zum Erzielen einen Montageschritt des Rechners (CSS) auf das Fahrzeug aufweist,
**dadurch gekennzeichnet, dass** das Erzielungsverfahren mindestens einen Schritt des Programmierens des Rechners gemäß mindestens einem Programm, das Programmanweisungen enthält, die die Rechenmittel der Regelvorrichtung der Aufhängung nach einem der Ansprüche 1 bis 15 umsetzen, aufweist.

**18.** EDV-Programm zum Steuern eines Rechners (CSS), das Programmanweisungen für die Berechnung der modalen Karosseriebeschleunigung ausgehend von der Ausschlagmessung (DEB), die von dem Radausschlagsensor (CAP-DEB) geliefert wird, aufweist, zur Berechnung der modalen Karosseriegeschwindigkeit in Abhängigkeit von mindestens dieser modalen Karosseriebeschleunigung und zur Berechnung der Steuergröße des Stellantriebs (M) in Abhängigkeit von dieser modalen Karosseriegeschwindigkeit, wenn es in einer Aufhängungsregelvorrichtung nach einem der Ansprüche 1 bis 15 umgesetzt wird.

FIG. 1

EP 1 926 615 B1

FIG. 2

**FIG. 3**

**FIG. 18**

FIG. 4

FIG. 5

EP 1 926 615 B1

DEB →

VVH →

IO →

[20]

→ RMAvAr

→ $k_Z, k_\varphi, k_\theta$

→ $I_\theta, I_\varphi$

→ AS

→ MSUS

→ $I_g$

DEB → [24] → NMC
→ NTC

**FIG. 6**

$ER_C = ER_{CA}, ER_{CB}, ER_{CC}, ER_{CD}$

$V_{mod} = \dot{Z}G, \dot{\theta}, \dot{\varphi}$

DEB →

ER

[10]

NMC →
NTC →
VVH →
$k_Z, k_\theta, k_\varphi$ →

$I_\theta, I_\varphi$ →
IS →
MSUS →

[21]

$F_{mod} = F_{Z1}, F_{\theta 1}, F_{\varphi 1} = F1$

[22]

[28]

$ER = ER_A, ER_B, ER_C, ER_D$

## FIG. 7

## FIG. 9

## FIG. 11

**FIG. 8**

```
                    MDAAV + BAAV
                         │
                         ▼
              S1 ┌──────────────┐
                 │   MSUSEAVF    │
                 └──────────────┘
                         │
                         ▼
                   ╱─────────╲           NON
              S2  ╱ VVH1≤VVH<VVH2 ╲ ──────────────────────┐
                  ╲      ?      ╱                          │
                   ╲─────────╱                             │
                         │ OUI                             │
                         ▼                                 │
                   ╱─────────╲                             │
                  ╱ IO = "fermé" ╲        NON              │
              S3  ╲ ou VVH>VVH3 ╱ ──────────────────┐     │
                   ╲─────────╱                       │     │
                         │ OUI                       │     │
                         ▼                           │     │
                   ╱──────────────╲                  │     │
              S4 ╱ |MSUSEAVF(n) - MSUSEAVF(n-1)| ╲   NON   │
                 ╲         >△          ╱ ──────────┐ │     │
                   ╲──────────────╱                │ │     │
                         │ OUI                      │ │     │
                         ▼                          ▼ ▼     ▼
         S5 ┌─────────────────────┐    ┌─────────────────────────────┐ S6
            │ MSUSEAV = MSUSEAVF  │    │ MSUSEAV(n) = MSUSEAV(n-1)   │
            └─────────────────────┘    └─────────────────────────────┘
                         │                          │
                         ▼                          ▼
                   S7 ┌──────────────┐
                      │   MSU SAV    │
                      └──────────────┘
```

FIG. 10

**FIG. 12**

## FIG. 13

SL1, SL2, SL3, SL4, SL5

TMORT        TMORT    TMOD

S10        S11        S13 S12        S12        S13        S10

S12        S11 S11

## FIG. 14

TMOD

TMORT

**FIG. 15**

lois d'amortissement

effort de l'amortisseur (N)   FA1

vitesse de débattement (m/s)

0   VEDB

ER

EP 1 926 615 B1

## FIG. 16

EP 1 926 615 B1

**FIG. 17**

ERGD = ERGD$_A$, ERGD$_B$, ERGD$_C$, ERGD$_D$

**EP 1 926 615 B1**

## RÉFÉRENCES CITÉES DANS LA DESCRIPTION

**Documents brevets cités dans la description**

*   US 5884921 A